(19) Europäisches Patentamt
European Patent Office
Office européen des brevets

(11) EP 4 022 280 B1

(12) # FASCICULE DE BREVET EUROPEEN

(45) Date de publication et mention de la délivrance du brevet:
**25.06.2025 Bulletin 2025/26**

(21) Numéro de dépôt: **20771211.8**

(22) Date de dépôt: **26.08.2020**

(51) Classification Internationale des Brevets (IPC):
***G01N 15/14*** *(2024.01)*

(52) Classification Coopérative des Brevets (CPC):
**G01N 15/1468; G01N 15/0205;** G01N 2015/0053; G01N 2015/1454

(86) Numéro de dépôt international:
**PCT/EP2020/073892**

(87) Numéro de publication internationale:
**WO 2021/037935 (04.03.2021 Gazette 2021/09)**

(54) **MÉTHODE ET DISPOSITIF DE CARACTÉRISATION OPTIQUE DE PARTICULES**

VERFAHREN UND VORRICHTUNG ZUR OPTISCHEN CHARAKTERISIERUNG VON PARTIKELN

METHOD AND DEVICE FOR THE OPTICAL CHARACTERISATION OF PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2019 FR 1909592**
**30.08.2019 FR 1909601**
**07.11.2019 FR 1912525**

(43) Date de publication de la demande:
**06.07.2022 Bulletin 2022/27**

(73) Titulaires:
- **Centre national de la recherche scientifique**
  **75016 Paris (FR)**
- **Université d'Aix Marseille**
  **13007 Marseille (FR)**
- **Centrale Marseille**
  **13013 Marseille (FR)**

(72) Inventeurs:
- **KHADIR, Samira**
  **13002 Marseille (FR)**
- **BAFFOU, Guillaume**
  **13380 Plan-de-Cuques (FR)**
- **MONNERET, Serge**
  **13013 Marseille (FR)**

(74) Mandataire: **Germain Maureau**
**12, rue Boileau**
**69006 Lyon (FR)**

(56) Documents cités:
**WO-A1-2019/020975**
**FR-A1- 3 013 128**
**US-A1- 2003 064 386**
**US-A1- 2009 325 199**

- **SAMIRA KHADIR ET AL: "Quantitative model of the image of a radiating dipole through a microscope", JOURNAL OF THE OPTICAL SOCIETY OF AMERICA A, vol. 36, no. 4, 1 April 2019 (2019-04-01), pages 478, XP055714869, ISSN: 1084-7529, DOI: 10.1364/JOSAA.36.000478**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### Domaine technique

La présente description concerne une méthode et un dispositif de caractérisation optique de particules et concerne en particulier la détermination de la polarisabilité optique dipolaire complexe de particules et/ou des sections efficaces d'absorption, d'extinction ou de diffusion.

### Etat de la technique

Certaines particules, telles que par exemple les nanoparticules (NPs) métalliques, présentent des effets de résonances plasmoniques localisées autour de la gamme visible /infrarouge et ont été largement étudiées pour des applications en nanophotonique comme par exemple le confinement de la lumière ou la génération de chaleur à l'échelle nanométrique pour des applications en catalyse, biomédecine ou biodétection. Récemment, des matériaux alternatifs pour les particules ont été proposés, que ce soit en plasmonique ou pour l'étude des résonances de Mie. Ces matériaux comprennent par exemple des alliages, des matériaux semi-conducteurs, des oxydes, des nitrures et des diélectriques.

Un défi majeur consiste à quantifier les propriétés optiques de l'ensemble de ces particules, telles que leur polarisabilité et/ou sections efficaces de diffusion, d'absorption et d'extinction, qui sont reliées à la façon dont les électrons oscillent dans les particules en présence de lumière, et à comparer ces réponses optiques entre elles. Ce problème reste entier aujourd'hui que ce soit par exemple en plasmonique, en nanophotonique, pour la recherche et la caractérisation actives de nouveaux matériaux.

Pour estimer quantitativement les propriétés optiques d'un matériau, ou d'une particule, e.g., sa capacité à exalter le champ proche optique, ou à générer de la chaleur, reliées respectivement à la section efficace de diffusion et à la section efficace d'absorption, des modèles analytiques peuvent être utilisés dans le cas de géométries simples, ou des simulations numériques dans le cas de géométries ou d'environnements complexes. Cependant, une particule constituée d'un certain matériau sera modélisée au moyen de sa permittivité optique macroscopique, généralement mesurée sur couches minces dudit matériau constituant la particule. Cette approche s'est révélée efficace pour la caractérisation de nanoparticules (NPs) en or, mais peut ne pas convenir si les particules sont constituées d'autres matériaux, qui présentent des effets de surface dominants ou des oxydations de surface.

Expérimentalement, la caractérisation optique de NPs consiste généralement à mesurer une section efficace d'extinction, comme décrit par exemple dans l'article de A. Arbouet *et al.* [Réf. 1].

Cependant, pour une caractérisation complète des propriétés optiques de particules, on cherche également à déterminer les sections efficaces de diffusion et d'absorption. Ces deux dernières grandeurs physiques sont plus difficiles d'accès et les méthodes proposées pour la mesure de chacune de ces grandeurs physiques requièrent en général des systèmes différents, parfois complexes et souvent basés sur des approximations (particules petites devant la longueur d'onde par exemple).

De façon intéressante, la polarisabilité optique dipolaire complexe $\alpha$, définie par la relation :

**[Math 1]**

$$\mathbf{p} = \varepsilon_0 \alpha \mathbf{E}_0$$

(où **p** est le moment dipolaire électrique, $\varepsilon_0$ est la permittivité du vide, et $\mathbf{E}_0$ l'amplitude complexe du champ électrique de la lumière incidente), est un paramètre plus fondamental de caractérisation d'une particule dipolaire, à partir duquel l'ensemble des sections efficaces peuvent être déterminées selon les équations :

**[Math 2]**

$$\sigma_{ext} = \frac{k}{n} \mathrm{Im}(\alpha)$$

**[Math 3]**

$$\sigma_{sca} = \frac{k^4}{6\pi} |\alpha|^2$$

**[Math 4]**

$$\sigma_{abs} = \sigma_{ext} - \sigma_{sca}$$

où *n* est l'indice optique de l'environnement de la particule, et *k* est la norme du vecteur d'onde et s'exprime selon l'équation :

**[Math 5]**

$$k = 2\pi/\lambda_0$$

où $\lambda_0$ est la longueur d'onde de la lumière dans le vide.

Ainsi, la mesure de la polarisabilité complexe peut fournir toutes les informations relatives aux propriétés optiques d'une particule. En outre, elle ne quantifie pas seulement l'amplitude de l'oscillation des électrons dans la particule, mais aussi la phase de l'oscillation, une quantité physique importante en plasmonique.

Des travaux antérieurs visant à déterminer la polarisabilité dipolaire de NPs ont été rapportés. Davis *et al.* [Réf. 2], par exemple, ont décrit une méthode de détermination de la polarisabilité anisotrope par microscopie confocale cohérente. Cette méthode permet d'estimer à la fois la polarisabilité complexe et la position d'une NP. Cependant, la méthode décrite est complexe tant du point de vue de la configuration expérimentale utilisée que du fait de la procédure d'extraction de la polarisabilité. Plus précisément, la méthode expérimentale est basée sur l'utilisation d'un microscope confocal et la méthode d'extraction de la polarisabilité utilise un algorithme d'inversion pour optimiser l'estimation de la polarisabilité à partir des données mesurées.

La présente description propose notamment une méthode de caractérisation optique complète de particules, permettant une mesure quantitative de la polarisabilité dipolaire complexe et/ou des sections efficaces d'absorption de diffusion et d'extinction, sans aucune connaissance préalable sur la composition des particules et leur géométrie, et avec un montage expérimental plus simple que ceux proposés dans l'état de l'art.

**Présentation générale**

Selon un premier aspect, la présente invention concerne une méthode de caractérisation optique de particules selon la revendication 1.

La méthode selon le premier aspect de la présente invention permet par exemple la détermination quantitative de la polarisabilité optique complexe dipolaire d'au moins une particule présente dans un échantillon.

La méthode selon le premier aspect comprend :

- l'éclairage dudit échantillon au moyen d'un faisceau lumineux, l'échantillon étant positionné dans l'espace objet d'un système optique ;
- l'acquisition d'au moins une image en phase et d'au moins une image en intensité de ladite au moins une particule éclairée par le faisceau lumineux, l'acquisition étant faite dans un plan d'analyse agencé dans l'espace image du système optique ;
- la détermination d'au moins une propriété optique de ladite au moins une particule à partir desdites au moins une image en phase et au moins une image en intensité, ladite au moins une propriété optique comprenant l'une au moins de la polarisabilité dipolaire complexe, la section efficace d'absorption, la section efficace de diffusion, la section efficace d'extinction.

Par « particule », on comprend dans la présente description et dans les revendications un objet confiné dans au moins une des trois dimensions de l'espace et dont au moins une des dimensions est contenue dans le champ de vue du système optique. Selon un ou plusieurs exemples de réalisation, la particule est une nanoparticule (NP) ou une microparticule. Par exemple, toutes les dimensions de la particule peuvent être comprises entre 10 nm et 500 nm. Selon un ou plusieurs exemples de réalisation, la particule est de nature biologique (végétale, animale, procaryote, eucaryote, unicellulaire, multicellulaire) ou inerte (métallique, diélectrique, minérale, semiconductrice). Par exemple, la particule peut être un organisme vivant, tel qu'une bactérie, ou un objet inerte, tel qu'une particule métallique comme par exemple une nanoparticule d'or.

Selon un ou plusieurs exemples de réalisation, la particule est un fil, c'est à dire un objet confiné dans seulement deux directions de l'espace. Par exemple, le fil peut avec un diamètre de 100 nm et mesurer 1 mm de longueur. Selon un ou plusieurs exemples de réalisation, la méthode selon le premier aspect peut s'appliquer à des particules isolées et/ou regroupées pour former, par exemple, un agglomérat ou un réseau régulier ou non de particules.

Selon un ou plusieurs exemples de réalisation, l'au moins une particule est présente dans l'échantillon sous la

forme d'une suspension ou déposée sur un substrat, tel qu'une lamelle de verre. Selon un ou plusieurs exemples de réalisation, l'échantillon comprend une pluralité de particules, dont certaines sont présentes sous la forme d'une suspension et d'autres sont déposées sur un substrat.

Par image en phase et image en intensité, on comprend une répartition spatiale bidimensionnelle respectivement de la phase et de l'intensité du champ électromagnétique dans ledit plan d'analyse.

La phase du champ électromagnétique en un point du plan d'analyse est comprise au sens large dans la présente description et comprend généralement toute quantité proportionnelle à la différence de marche (ou « ddm », ou OPD, selon l'appellation anglo-saxonne, pour Optical Path Difference) subie par un rayon transmis ou réfléchi par l'échantillon et incident au dit point en présence de la particule caractérisée, en comparaison du cas où la particule est absente. Ainsi, la phase peut se rapporter à une quantité proportionnelle au gradient local du front d'onde optique.

Les déposants ont montré qu'il était possible d'obtenir par une méthode expérimentale simple, une caractérisation quantitative et complète de particules comprenant notamment la détermination d'une propriété optique dont l'une au moins parmi la polarisabilité complexe et les trois sections efficaces.

Par « polarisabilité », dans les revendications et la description, on entend la polarisabilité optique complexe dipolaire. Au sens de la présente description, la détermination de la polarisabilité optique complexe dipolaire comprend la détermination d'au moins un de la partie réelle, de l'argument, de la norme, ou de la partie imaginaire de la polarisabilité complexe de l'au moins une particule.

Selon un ou plusieurs exemples de réalisation, la polarisabilité est un scalaire défini par l'équation (1), et peut être un nombre complexe. La mesure d'un seul scalaire pour la polarisabilité peut convenir par exemple aux particules isotropes.

Selon un ou plusieurs exemples de réalisation, la particule considérée n'est pas isotrope et la méthode selon le premier aspect vise à déterminer un tenseur de polarisabilité optique dipolaire. La méthode selon le premier aspect peut alors comprendre la détermination d'autant de mesures scalaires qu'il y a de composantes dans le tenseur. De telles composantes du tenseur de polarisabilité sont associées à des dimensions de l'espace dans lequel la polarisabilité de la particule est considérée. Selon un ou plusieurs exemples de réalisation, lorsque l'on considère, par exemple, le cas d'une particule possédant une polarisabilité pouvant s'exprimer comme un tenseur comportant 4 composantes dans un repère orthogonal (*x, y*), les composantes du tenseur peuvent être mesurées par la méthode, en variant l'orientation de la polarisation linéaire du faisceau lumineux éclairant l'échantillon via un polariseur (polariseur en illumination), et en variant l'orientation d'un polariseur linéaire placé entre l'échantillon et l'espace image du système optique (polariseur en détection), par exemple juste en amont de l'espace image du système optique. Par exemple, pour obtenir le terme scalaire $\alpha_{xx}$ (resp. $\alpha_{yy}$), la méthode selon le premier aspect comprend l'orientation des deux polariseurs (en illumination et détection) suivant la même direction *x* (resp. *y*), et la détermination de la polarisabilité dans cette condition. Pour obtenir le terme diagonal $\alpha_{xy}$ (resp. $\alpha_{yx}$), l'échantillon est illuminé avec une lumière polarisée suivant *x* (resp. *y*), le polariseur en détection est orienté suivant l'autre direction *y* (resp. *x*), et la polarisabilité est déterminée dans cette condition.

Selon un ou plusieurs exemples de réalisation, la méthode comprend l'acquisition d'une image en phase et d'une image en intensité de façon simultanée. Une telle simultanéité peut par exemple permettre d'accélérer le temps de mesure de la méthode selon le premier aspect, et peut s'avérer pratique dans le cas de particules dont les propriétés optiques évoluent dans le temps.

Selon un ou plusieurs exemples de réalisation, l'acquisition simultanée d'au moins une image en phase et d'au moins une image en intensité est réalisée par interférométrie à décalage multilatéral, par exemple à décalage quadrilatéral. L'interférométrie à décalage multilatéral permet, en une seule mesure, une détermination quantitative de la phase et de l'intensité avec une haute résolution et une sensibilité élevée.

Alternativement, l'acquisition d'au moins une image en phase et d'au moins une image en intensité peut ne pas être simultanée. Par exemple, dans le cas où la propriété optique de la particule varie peu ou pas du tout au cours du temps, une telle simultanéité n'est pas requise.

Selon un ou plusieurs exemples de réalisation, l'acquisition d'au moins une image en phase et d'au moins une image en intensité est réalisée par microscopie holographique "hors axe" (DHM pour Digital Holographic Microscopy, Hilbert Phase Microscopy, ) ou "common path" (Fourier Phase Microscopy, Diffraction Phase Microscopy), par "phase-shifting interferometry », ou au moyen d'une technique non interférométrique basée sur l'équation du transport d'intensité

(« TIE microscopy »).

Selon un ou plusieurs exemples de réalisation, le système optique fonctionne en transmission. Selon un ou plusieurs exemples de réalisation, le système optique fonctionne en réflexion.

Selon un ou plusieurs exemples de réalisation, l'éclairage de l'échantillon est au moins partiellement spatialement cohérent et obtenu à partir d'une source lumineuse non cohérente, par exemple une LED, une lampe à filament, une lampe à plasma entretenu par laser (LDLS). Un dispositif permettant l'ajustement de l'ouverture numérique de l'éclairage peut par exemple contribuer à faire varier le degré de cohérence spatial de l'éclairage. Selon un ou plusieurs

exemples de réalisation, l'éclairage comprend une illumination de Köhler.

Selon la présente invention, la détermination de la propriété optique comprend un traitement effectué à partir desdites au moins une image en phase et en intensité.

Ledit traitement comprend le calcul, à partir de ladite au moins une image en phase et de ladite au moins une image en intensité, d'une image combinée, ladite image combinée (ou « image de combinaison ») étant obtenue à partir de la transmission complexe normalisée, de la partie réelle de la transmission complexe normalisée ou de la partie imaginaire de la transmission complexe normalisée. Le traitement comprend également la sommation de points (ou « pixels ») de ladite image combinée dans un champ donné de l'image comprenant une image de ladite au moins une particule. L'image de combinaison peut comprendre des tâches d'Airy, correspondant à la détection d'autant de particules présentes dans l'échantillon.

Selon un ou plusieurs exemples de réalisation, la sommation de pixels s'effectue sur une zone restreinte de l'image de combinaison, comprenant par exemple une tâche d'Airy correspondant à l'image d'une particule, par exemple la zone minimale permettant de recouvrir l'ensemble des anneaux de diffraction de la tâche d'Airy.

Dans la mesure où tous les anneaux de diffraction de la tâche d'Airy sont contenus dans la zone de l'image de combinaison sur laquelle se fait la sommation de pixels, la méthode pourra offrir une détermination précise de l'au moins une propriété optique. Lorsque la sommation se fait sur une zone contenant plusieurs tâches d'Airy correspondant à autant de particules, alors l'ensemble desdites particules pourra être considéré en tant que système multiple. La méthode permet de déterminer la polarisabilité et les sections efficaces d'un tel système multiple, car la polarisabilité et les sections efficaces sont additives.

Selon un ou plusieurs exemples de réalisation, la méthode comprend en outre la variation de l'ouverture numérique dudit système optique et l'acquisition d'une pluralité d'images en intensité et/ou d'images en phase aux différentes ouvertures numériques. Par exemple, le système optique peut comprendre un iris, dont la rotation permet de faire varier l'ouverture numérique du système optique. Acquérir des images en intensité et en phase à différentes ouvertures numériques et les moyenner permet de réduire l'extension spatiale des anneaux de diffraction d'une tâche d'Airy, et donc d'intégrer une zone de l'image (e.g., en effectuant une sommation de pixels de l'image) comprenant la tâche d'Airy moins étalée, et de gagner ainsi en rapport signal sur bruit. Cela peut par exemple permettre d'étudier des particules très proches les unes des autres et comportant des anneaux d'Airy qui se chevaucheraient sans un tel moyennage. De plus, lorsqu'une image de combinaison est produite à partir d'une acquisition d'une image en phase et d'une acquisition d'une image en intensité, un gain de $\sqrt{N}$ peut être obtenu dans le rapport signal sur bruit, où *N* est le nombre d'images de combinaison produites aux différentes ouvertures numériques.

Selon un ou plusieurs exemples de réalisation, le plan d'analyse est conjugué optiquement avec le plan de l'échantillon. Une défocalisation, c'est à dire une mesure dans un plan qui s'écarte du plan conjugué avec le plan de l'échantillon, n'affecte cependant pas la justesse de la mesure, car les déposants ont montré que la valeur mesurée des propriétés optiques telles que la polarisabilité $\alpha$ et les sections efficaces est indépendante de la mise au point.

Dans la présente description, un changement de mise au point est synonyme d'une défocalisation par rapport à une configuration dans laquelle un plan de l'échantillon contenant la particule et le plan d'analyse sont optiquement conjugués. Ainsi, différentes mises au point correspondent par exemple à différentes positions dudit plan de l'échantillon par rapport à une position de référence optiquement conjuguée avec le plan d'analyse. Alternativement, différentes mises au point peuvent correspondre à différentes positions du plan d'analyse par rapport à une position de référence optiquement conjuguée avec le plan de l'échantillon comprenant la particule.

Selon un ou plusieurs exemples de réalisation, la méthode comprend en outre l'acquisition d'une pluralité d'images en intensité et/ou d'images en phase pour une pluralité de mises au point du système optique. Par exemple, lorsque le système optique comprend un objectif de microscope, la mise au point peut être modifiée en changeant la distance entre l'échantillon et l'objectif du microscope vers des distances hors-focalisation. Acquérir des images en intensité et en phase pour différentes mises au points et les moyenner permet de réduire l'extension spatiale des anneaux de diffraction d'une tâche d'Airy, et donc d'intégrer une zone de l'image (e.g., en effectuant une sommation de pixels de l'image) comprenant la tâche d'Airy moins étalée, et de gagner ainsi en rapport signal sur bruit. Cela peut par exemple permettre d'étudier des particules très proches les unes des autres et comportant des anneaux d'Airy qui se chevaucheraient sans un tel moyennage. Par exemple, lorsqu'une image de combinaison est produite à partir d'une acquisition d'une image en phase et d'une acquisition d'une image en intensité, un gain de $\sqrt{N}$ peut être obtenu dans le rapport signal sur bruit, où *N* est le nombre d'images de combinaison produites aux différentes mises au point.

Selon un deuxième aspect, la présente invention concerne un dispositif de caractérisation optique d'au moins une particule présente dans un échantillon selon la revendication 11.

Le dispositif de caractérisation optique comprend :

- une source lumineuse pour la formation d'un faisceau d'éclairage dudit échantillon ;

- un système optique, l'échantillon étant, en opération, positionné dans un espace objet dudit système optique ;
- une unité d'acquisition d'au moins une image en phase et d'au moins une image en intensité de ladite au moins une particule éclairée par le faisceau lumineux, l'acquisition étant faite dans un plan d'analyse situé dans l'espace image du système optique.
- une unité de calcul configurée pour la détermination d'au moins une propriété optique de ladite au moins une particule à partir desdites acquisitions desdites au moins une image en phase et en intensité, ladite au moins une propriété optique comprenant l'une au moins de la polarisabilité dipolaire complexe, la section efficace d'absorption, la section efficace de diffusion, la section efficace d'extinction.

Par exemple, la source lumineuse peut être un dispositif de Köhler. Une illumination de Köhler comportant une LED ou une lampe à filament est utilisée pour illuminer un échantillon avec un faisceau lumineux contrôlé en taille et en ouverture numérique. Différentes couleurs de LEDs sont utilisées pour sélectionner la plage de longueur d'onde d'illumination. Une telle longueur d'onde peut être alternativement variée en utilisant une source de lumière blanche et un monochromateur.

Selon un ou plusieurs exemples de réalisation, l'unité d'acquisition comprend un interféromètre à décalage multilatéral, par exemple à décalage quadrilatéral.

Selon un ou plusieurs exemples de réalisation, le plan d'analyse est conjugué optiquement avec le plan de l'échantillon ou faiblement défocalisé.

Selon un ou plusieurs exemples de réalisation, le système optique comprend un objectif de microscope.

Selon un ou plusieurs exemples de réalisation, le système optique permet de varier l'ouverture numérique de l'illumination et ladite unité de calcul est configurée pour la détermination de ladite au moins une propriété optique à partir d'une pluralité d'images en phase et en intensité acquises pour une pluralité d'ouvertures numériques. Par exemple, le système optique peut comprendre un iris, dont la rotation permet de faire varier l'ouverture numérique du système optique.

Selon un ou plusieurs exemples de réalisation, le système optique permet de varier la mise au point et ladite unité de calcul est configurée pour la détermination de ladite au moins une propriété optique à partir d'une pluralité d'images en phase et en intensité acquises pour une pluralité de mises au point.

Selon un troisième aspect, la présente invention concerne une méthode de caractérisation de l'interaction d'au moins une molécule cible avec une particule selon la revendication 5. Dans le domaine des capteurs, par exemple dans le domaine des biocapteurs, le développement de moyens permettant la capture efficace et directe d'un signal de reconnaissance d'une molécule cible, telle qu'une molécule présentant un intérêt biologique, constitue un défi important.

Les demandes de brevet publiées US 2003/0064386 et US 2009/0325199 décrivent des méthodes de caractérisation de l'interaction d'au moins une molécule cible avec une particule. Le système Biacore© est un exemple de système commercial permettant la détection de molécules en solution, et la mesure de constantes d'association/-dissociation/affinité entre molécules. Le système Biacore© utilise une couche métallique sur substrat transparent, et donc un type de géométrie absorbant de façon résonante une onde incidente à un angle d'incidence très spécifique, pour une longueur d'onde donnée. Lorsque des molécules d'intérêt s'accrochent sur la surface métallique, le système mesure une variation de cet angle d'incidence. Le système Biacore© est onéreux, complexe, et nécessite de prendre des mesures de différents angles pour obtenir une mesure du déplacement de la résonance plasmonique en longueur d'onde, reliée à l'adsorption de molécules cibles sur la surface métallique.

Les méthodes actuelles de biodétection, lorsqu'elles sont associées à la plasmonique par exemple, reposent presque exclusivement sur la détection de décalages spectraux et leurs changements en intensité correspondants, comme décrit par exemple dans l'article de P. Van Duyne *et al.,* [Réf. 3].

La méthode de caractérisation de l'interaction d'au moins une molécule cible avec au moins une particule présente dans un échantillon comprend :

- une caractérisation optique de ladite au moins une particule pour déterminer, au cours du temps, au moins une desdites propriétés optiques ;
- la caractérisation de l'interaction avec ladite au moins une molécule cible sur la base d'une mesure de la variation au cours du temps de la dite au moins une propriété optique.

Selon un ou plusieurs exemples de réalisation, la molécule cible est choisie parmi le groupe comprenant anticorps, antigènes, acides nucléiques, protéines, carbohydrates, chromophores, aptamères, toxines, polluants.

Selon un ou plusieurs exemples de réalisation, ladite au moins une propriété optique comprend au moins l'un de la partie réelle, de l'argument, de la norme ou de la partie imaginaire de la polarisabilité complexe dipolaire de l'au moins une particule.

Une telle mesure permet de détecter de façon sensible l'interaction de molécules cibles avec des particules. Par exemple, la polarisabilité complexe mesurée d'une particule peut varier de façon très abrupte avec la longueur d'onde, par exemple dans un domaine de longueur d'onde centré autour de la résonance plasmonique ou de la résonance de Mie de la

particule.

La caractérisation optique de ladite au moins une particule est réalisée selon le premier aspect et comprend :

- l'éclairage dudit échantillon au moyen d'un faisceau lumineux, l'échantillon étant positionné dans l'espace objet d'un système optique ;
- l'acquisition d'au moins une image en phase et d'au moins une image en intensité de ladite au moins une particule éclairée par le faisceau lumineux, l'acquisition étant faite dans un plan d'analyse agencé dans l'espace image du système optique ;
- la détermination d'au moins une propriété optique de ladite au moins une particule à partir desdites au moins une image en phase et au moins une image en intensité, ladite au moins une propriété optique comprenant l'une au moins de la polarisabilité dipolaire complexe, la section efficace d'absorption, la section efficace de diffusion, la section efficace d'extinction.

Selon un ou plusieurs exemples de réalisation, la méthode de caractérisation selon le troisième aspect comprend une détection qualitative de l'interaction. Selon un ou plusieurs exemples de réalisation, la méthode selon le troisième aspect comprend en outre une mesure quantitative d'au moins l'une des grandeurs physiques suivantes :

- une concentration en molécule cible dans l'échantillon,
- une constante d'affinité et/ou d'association et/ou de dissociation d'une molécule cible avec l'au moins une particule ou avec une molécule préalablement attachée à l'au moins une particule.

Une telle molécule peut être attachée à la particule de façon covalente, e.g. par greffage, ou de façon réversible, e.g. via une ou plusieurs interactions faibles comme une interaction électrostatique, une liaison hydrogène, une interaction de van der Waals. Par exemple, la molécule préalablement attachée à l'au moins une particule est sélectionnée dans le groupe comprenant anticorps, antigènes, acides nucléiques, protéines, carbohydrates, chromophores, aptamères, toxines, polluants. Par exemple, la molécule préalablement attachée à l'au moins une particule est un anticorps, une glycoprotéine, ou encore un fragment d'ADN.

De telles grandeurs physiques, i.e., concentration et constantes d'affinité et/ou d'association et/ou de dissociation, peuvent être mesurées quantitativement. Par exemple, la concentration en molécule cible dans l'échantillon peut être déduite d'une mesure au cours du temps de l'au moins une propriété optique. Une variation abrupte de l'au moins une propriété optique de la particule peut par exemple être détectée au cours du temps, pouvant correspondre à un instant où la particule entre en interaction avec au moins une molécule cible, par exemple à un instant où au moins une molécule cible s'associe avec la particule pour former un complexe « particule »-« molécule(s) cible(s) » ou se dissocie de la particule. Une variation abrupte au cours du temps de l'au moins une propriété optique de la particule peut également être détectée et correspondre à un instant où au moins une molécule préalablement attachée à la particule entre en interaction avec au moins une molécule cible, par exemple à un instant où au moins une molécule cible s'associe avec la particule pour former au moins un complexe « molécule attachée à la particule »-« molécule(s) cible(s) ».

En présence par exemple d'un réseau de particules, des courbes de calibration peuvent être mesurées pour une molécule cible. De telles courbes de calibrations peuvent permettre de connaître la valeur de la propriété optique attendue de la particule pour différentes concentrations en molécule cible, et ainsi permettre de remonter à la concentration en molécule cible dans un échantillon.

De même, une constante d'association, ou une constante de dissociation, rendant compte par exemple de la propension d'un complexe « particule »-« molécule(s) cible(s) » ou d'un complexe « molécule attachée à la particule »-« molécule(s) cible(s) » à se former, ou respectivement, à se dissocier, peuvent être mesurées quantitativement à partir de la concentration en molécule cible, de la concentration en particule, et de la concentration de complexe « particule-molécule(s) cible(s) » ou, respectivement, de complexe « molécule attachée à la particule »-« molécule(s) cible(s) », dans l'échantillon. Une constante d'affinité peut également être déterminée, égale au rapport de la constante d'association sur la constante de dissociation ou égale à l'inverse d'un tel rapport, et ainsi rendre compte de l'affinité de la molécule cible pour la particule ou pour la molécule attachée à la particule. Cette affinité peut notamment reposer sur la nature, la géométrie et le nombre des interactions physiques entre la molécule cible et la particule ou entre la molécule cible et la molécule attachée à la particule (interactions électrostatiques, liaisons hydrogène, interactions de van der Waals...).

Selon un ou plusieurs exemples de réalisation, l'au moins une particule est une particule métallique et comprend au moins une résonance plasmonique. Selon un ou plusieurs exemples de réalisation, l'éclairage de l'échantillon comprend une illumination dans une plage de longueurs d'onde comprenant au moins une longueur d'onde de résonance plasmonique de l'au moins une particule.

Selon un ou plusieurs exemples de réalisation, l'au moins une particule est une particule diélectrique et comprend au moins une résonance de Mie. Selon un ou plusieurs exemples de réalisation, l'éclairage de l'échantillon comprend une illumination dans une plage de longueurs d'onde comprenant au moins une longueur d'onde de résonance

de Mie de l'au moins une particule.

Selon un ou plusieurs exemples de réalisation, la méthode selon le troisième aspect comprend en outre une calibration de la concentration de l'au moins une molécule cible en fonction de la variation de l'au moins une propriété optique. La détermination de l'interaction avec l'au moins une molécule cible comprend une détermination de la concentration de ladite molécule cible dans l'échantillon basée sur la calibration. Une telle calibration peut être effectuée en présence par exemple d'un réseau de particules. Des courbes de calibration peuvent être mesurées pour une molécule cible, en présence d'un type prédéterminé de particule. De telles courbes de calibrations peuvent permettre de connaître la valeur de la propriété optique attendue de la particule pour différentes concentrations en molécule cible, et ainsi permettre de remonter à la concentration en molécule cible dans un échantillon.

Selon un ou plusieurs exemples de réalisation, la méthode comprend l'apport dans l'échantillon de l'au moins une molécule cible via un circuit microfluidique. Par exemple, cet apport peut se faire en faisant circuler une solution comprenant la molécule cible dans le circuit microfluidique.

Selon un ou plusieurs exemples de réalisation, l'au moins une particule est attachée à un substrat. Par exemple, la particule est attachée à un substrat solide. Selon un ou plusieurs exemples de réalisation, l'au moins une particule est attachée à un substrat de façon covalente. De cette façon, la particule reste figée et ne flotte pas hors focalisation ou hors champ de vue. Le fait que la particule est attachée au substrat peut en outre permettre de réutiliser la particule pour des mesures ultérieures, par exemple lorsque l'association de la molécule cible à la particule ou à une molécule préalablement attachée à la particule est réversible.

Selon un ou plusieurs exemples de réalisation, la méthode comprend une caractérisation de l'interaction d'une pluralité de molécules cibles avec une pluralité de particules, dans laquelle au moins deux de la pluralité de molécules cibles sont de nature différente, et/ou au moins deux de la pluralité de particules sont de nature différente. La méthode selon le troisième aspect peut ainsi offrir la possibilité de multiplexer la détection et/ou les mesures quantitatives. Ainsi, selon un ou plusieurs exemples de réalisation, la méthode selon le troisième aspect permet de détecter de nombreuses interactions dans l'échantillon et/ou de quantifier différentes grandeurs physiques propres aux molécules cibles et aux particules de l'échantillon de façon simultanée, en parallèle. Différentes zones de l'image en phase ou de l'image en intensité peuvent être associées à différents types de particules. Selon un ou plusieurs exemples de réalisation, la particule est sélectionnée pour son aptitude à porter une molécule attachée à la particule. Une telle molécule attachée à la particule, par exemple un anticorps, peut être sélectionnée pour la particularité de son interaction avec différentes molécules cibles, e.g., une certaine affinité pour une certaine nature de molécule cible. Selon un ou plusieurs exemples de réalisation, la particule est sélectionnée pour la particularité de son interaction avec différentes molécules cibles, e.g., une certaine affinité de la particule pour une certaine nature de molécule cible.

Selon un quatrième aspect, la présente invention porte sur un dispositif pour la caractérisation de l'interaction d'au moins une molécule cible avec au moins une particule présente dans un échantillon selon la revendication 16, comprenant :

- un dispositif de caractérisation optique de ladite au moins une particule selon le deuxième aspect configuré pour déterminer, au cours du temps, au moins une propriété optique de ladite au moins une particule; et dans lequel
- ladite unité de calcul est configurée, en outre, pour la caractérisation de l'interaction avec ladite au moins une molécule cible sur la base d'une mesure de la variation au cours du temps de ladite au moins une propriété optique.

Selon un ou plusieurs exemples de réalisation, ladite au moins une propriété optique comprend au moins l'un de la partie réelle, de l'argument, de la norme, ou de la partie imaginaire de la polarisabilité complexe de l'au moins une particule.

Selon un ou plusieurs exemples de réalisation, ladite unité de calcul est configurée en outre pour déterminer une mesure quantitative d'au moins l'une des grandeurs physiques suivantes :

- une concentration en molécule cible dans l'échantillon,
- une constante d'affinité et/ou d'association et/ou de dissociation d'une molécule cible avec l'au moins une particule ou avec une molécule préalablement attachée à l'au moins une particule.

Selon un ou plusieurs exemples de réalisation, le dispositif comprend un circuit microfluidique pour apporter et/ou faire circuler l'au moins une molécule cible dans l'échantillon.

Les formes de réalisation décrites ci-dessus ne sont pas exhaustives. Notamment, il est entendu que des formes de réalisation supplémentaires peuvent être envisagées sur la base de différentes combinaisons des formes de réalisation explicitement décrites. Sauf spécification contraire dans la présente description, il sera apparent pour l'homme du métier que toutes les formes de réalisation décrites ci-dessus peuvent être combinées entre elles. Par exemple, sauf spécification contraire, toutes les caractéristiques des formes de réalisation décrites ci-dessus, quelles que soient les formes de réalisation de la méthode ou du dispositif auxquelles elles se réfèrent, peuvent être combinées avec ou

remplacées par d'autres caractéristiques d'autres formes de réalisation.

Des formes de réalisation selon les aspects référencés ci-dessus ainsi que des avantages supplémentaires apparaîtront à la lecture de la description détaillée suivante et des revendications annexées.

## Brève description des figures

[Fig. 1] représente : Schéma d'un exemple de dispositif de caractérisation optique selon la présente description.

[Fig. 2] représente : Images (a) OPD et (c) intensité d'une NP d'or de 100 nm de diamètre (Echelle : 1 $\mu$m) ; (b) et (d) Profils correspondant, respectivement, aux images (a) et (c).

[Fig. 3] représente : Polarisabilités de nanoparticules d'or de 100 nm mesurées expérimentalement dans le domaine visible. (a) Partie réelle, (b) Partie imaginaire, et (c) argument de la polarisabilité. Les mesures ont été réalisées en milieu homogène avec un indice de réfraction de 1,5. Les résultats expérimentaux sont comparés à des calculs théoriques basés sur la théorie de Mie.

[Fig. 4] représente : (a) Polarisabilités mesurées de NPs d'or (gris) et de polystyrène (noir) dispersées sur le même substrat en verre, représentées dans le plan complexe (b) Image SEM (microscopie électronique à balayage), (c) Images OPD (phase), (d) intensité des NPs d'or et de polystyrène. Sur l'image (b), les particules d'or sont indiquées avec un ergot et celles en polystyrène avec une flèche. Echelle : 2 $\mu$m.

[Fig. 5] représente : (a) Images d'intensité et d'OPD de NPs d'or de 100 nm à différentes positions ***z*** de l'échantillon, avec leurs profils. (b) Partie réelles et imaginaires de la polarisabilité pour différentes positions ***z*** montrant l'absence d'effet de la défocalisation du microscope sur l'estimation de $\alpha$. Echelle : 1 $\mu$m.

[Fig. 6] représente : (a) Images d'intensité et d'OPD de nanoparticules d'or mesurées avec différentes ouvertures numériques de l'objectif. (b) Parties réelles et imaginaire de la polarisabilité mesurées à partir de ces images, montrant l'absence d'effet de l'ouverture numérique sur la détermination de la valeur de polarisabilité.

[Fig. 7] représente : Partie réelle de la polarisabilité d'un nano-bâtonnet d'or en fonction de la longueur d'onde mesuré par interférométrie à décalage quadrilatéral. Un saut abrupt est observé vers 700 nm, correspondant à la résonance plasmonique de la nanoparticule.

[Fig. 8] représente : Exemple d'échantillon, composé d'un substrat transparent sur lequel sont fixées des nanoparticules d'or. Dans cet exemple, les nanoparticules sont fonctionnalisées avec des protéines d'intérêt, *i.e.,* des anticorps.

[Fig. 9] représente : Mesure quantitative de la concentration en molécule cible dans l'échantillon ; (a) Mesure au cours du temps de l'observable m pour différentes concentrations en molécule cible, (b) Courbe de calibration de l'observable m en fonction de la concentration en molécule cible.

[Fig. 10] représente : Mesure de l'observable à l'équilibre $m_{eq}$ pour une série de concentrations en molécule cible.

[Fig. 11] représente : (a) Mesure au cours du temps de l'observable m pour une série de concentrations en molécule cible, (b) Tracé de la dérivée de l'observable m par rapport au temps pour une série de concentrations en molécule cible, (c) Tracé des pentes des droites de l'image (b) en fonction de la concentration en molécule cible.

## Description détaillée

Dans la description détaillée suivante des formes de réalisation de la présente invention, de nombreux détails spécifiques sont exposés afin de fournir une compréhension plus approfondie de la présente description. Cependant, il apparaîtra à l'homme du métier que la présente description peut être mise en œuvre sans ces détails spécifiques. Dans d'autres cas, des caractéristiques bien connues n'ont pas été décrites en détail pour éviter de compliquer inutilement la description.

Par ailleurs, le terme « comprendre » signifie la même chose que « inclure », « contenir », et est inclusif ou ouvert et n'exclut pas d'autres éléments non décrits ou représentés. En outre, dans la présente description, le terme « environ » est synonyme de (signifie la même chose que) une marge inférieure et/ou supérieure de 10%, par exemple 5%, de la valeur respective.

La présente description décrit des exemples de traitement d'images d'intensité et de front d'onde selon la présente description (ou PIWI, pour « Processing of Intensity and Wavefront Images ») de particules sous éclairage.

Dans les exemples décrits ci-dessous, une technique d'imagerie de phase quantitative appelée interférométrie à décalage multilatéral, et notamment à décalage quadrilatéral (ou QLSI, pour « Quadriwave Lateral Shearing Interferometry) est utilisée, car elle permet à la fois une imagerie à haute résolution, une sensibilité élevée et une mesure de phase quantitative. Toutefois, d'autres techniques d'imagerie peuvent être utilisées dans des exemples de méthodes selon l'invention.

Dans une première partie, un exemple de dispositif de caractérisation selon la présente description est décrit

dans lequel un interféromètre à décalage multilatéral est mis en œuvre. Dans une deuxième partie, il est expliqué comment utiliser PIWI pour récupérer la polarisabilité complexe de NPs simples. En particulier, il est montré que les mesures sont indépendantes de la mise au point, de l'ouverture numérique, et ne sont pas affectées par la limite de diffraction, ce qui rend les mesures particulièrement robustes et précises. Dans une troisième partie, les résultats sur les NPs en or (sphères et bâtonnets) et diélectriques sont présentés et discutés. Les mesures sont appuyées par des calculs théoriques et des simulations numériques. Une quatrième partie est consacrée à la caractérisation de couches denses de NPs, pour lesquelles un traitement d'images PIWI permet également de récupérer une polarisabilité complexe effective. Dans une cinquième partie, des applications des méthodes de caractérisation optique de particules selon la présente description sont décrites. Par exemple, des méthodes de caractérisation de l'interaction entre une molécule cible et une particule sont décrites.

*Première partie : Exemple de dispositif de caractérisation optique de particules selon la présente description*

La Figure 1 illustre un exemple de dispositif 100 de caractérisation optique d'une particule présente dans un échantillon 10, selon la présente description.

Le dispositif 100 comprend une source lumineuse 110 configurée pour former un faisceau d'éclairage de l'échantillon 10. Par exemple, la source lumineuse 110 comprend une pluralité de diodes électroluminescentes ou LEDs 111, une lentille 112 et des diaphragmes de champ 113 et d'ouverture 114. Le dispositif 100 comprend en outre un système optique 120 comprenant par exemple un objectif de microscope et une unité d'acquisition 130, 140 d'au moins une image en phase et d'au moins une image en intensité de la particule éclairée par le faisceau d'éclairage, l'acquisition étant faite dans un plan d'analyse agencé dans l'espace image dudit système optique 120.

Le dispositif 100 comprend en outre une unité de calcul 150 configurée pour la détermination d'au moins une propriété optique de ladite au moins une particule à partir desdites au moins une image en phase et au moins une image en intensité, ladite au moins une propriété optique comprenant l'une au moins de la polarisabilité dipolaire complexe, la section efficace d'absorption, la section efficace de diffusion, la section efficace d'extinction.

L'échantillon 10 est positionné, en opération, dans l'espace objet du système optique 120.

En outre, dans cet exemple, l'unité d'acquisition comprend un interféromètre à décalage multilatéral 140. L'interféromètre 140 comprend un réseau bidimensionnel ou grille 141 situé à une distance millimétrique d'une caméra classique 142.

Des exemples d'images en intensité et en phase d'une nanoparticule acquises par interférométrie à décalage quadrilatéral, ainsi que les profils de telles images sont montrés à la Figure 2 (Figures 2a et 2b, respectivement pour les images, et Figures 2c et 2d, respectivement, pour les profils de ces images).

L'interférométrie à décalage multilatéral, par exemple bilatéral, trilatéral ou quadrilatéral (QLSI) est une technique optique capable de cartographier en une seule acquisition interférométrique non seulement l'intensité mais également la phase d'un faisceau lumineux donné en deux dimensions. Cartographier la phase d'un faisceau lumineux revient à cartographier le profil du front d'onde du faisceau lumineux ou, de manière équivalente, la différence de chemin optique (OPD) créée par un objet à l'étude. Une caméra de détection de front d'onde QLSI comprend un réseau de diffraction bidimensionnel (2D) (généralement appelé masque de Hartmann modifié, MHM) situé à une distance millimétrique d'une caméra classique (cf. article de J. Primot *et al.,* [Réf. 4] ). Grâce au réseau, le front d'onde est reproduit en quatre copies identiques mais légèrement décalées, interférant les unes avec les autres, entraînant la formation d'un interférogramme sur le capteur de la caméra. L'interférogramme est traité numériquement en temps réel (environ 1 image par seconde) pour récupérer les profils d'intensité et de front d'onde de la lumière incidente. La nature interférométrique des mesures rend cette technique extrêmement sensible. La caméra QLSI utilisée dans les exemples expérimentaux présentés ci-après comprend un réimageur Sid4 Element de Phasics© associée à un capteur Zyla© 5.5 sCMOS et présente une sensibilité de 0,3 nm $Hz^{-1/2}$. Il est important de noter que l'interférométrie QLSI bénéficie des avantages d'une mesure interférométrique sans souffrir de ses inconvénients : aucun faisceau de référence n'est requis comme pour d'autres techniques interférométriques, ni aucun alignement complexe sensible aux perturbations externes. Le positionnement relatif du MHM par rapport à la caméra est effectué une fois pour toutes et n'est pas sensible aux perturbations externes telles que la variation de température, la dérive mécanique ou le flux d'air.

Plusieurs applications basées sur l'utilisation de QLSI, telles que l'imagerie cellulaire, l'imagerie thermique, et l'imagerie de matériaux 2D sont déjà décrites, par exemple, dans l'article S. Khadir *et al.,* [Réf. 5]. La métrologie sur NP apparaît comme une nouvelle application du QLSI et plus généralement de l'imagerie de phase quantitative.

Dans l'exemple de la figure 1, une illumination de Köhler a été utilisée pour éclairer l'échantillon avec une onde optique contrôlée (zone éclairée et ouverture numérique contrôlées). Une pluralité de LEDs 111 de couleurs différentes ont été utilisées pour faire varier la longueur d'onde de l'éclairage et effectuer les mesures spectrales (par exemple, 405, 420, 430, 455, 470, 505, 530, 565, 590, 617, 625, 665, 680, 700, 730, 780, 850 nm).

Une méthode de caractérisation optique d'une particule selon la présente description peut être mise en œuvre de la manière suivante, par exemple au moyen du dispositif décrit sur la figure 1.

Dans chaque mesure, une image de référence peut d'abord être prise dans une zone dégagée (sans aucun objet), avant d'acquérir une image avec l'objet d'intérêt dans le champ de vision, ce qui correspond à l'approche conventionnelle en QLSI, destinée à éliminer toute imperfection du faisceau lumineux entrant. Le coefficient complexe de transmission normalisé $t/t_0$ s'exprime selon l'équation 6 suivante, en fonction du coefficient complexe de transmission de l'échantillon sans particule $t_0(x, y)$ et du coefficient complexe de transmission de l'échantillon en présence de la particule d'intérêt, i.e., $t(x, y)$ :

**[Math 6]**

$$\frac{t}{t_0} = \sqrt{T}\exp(i\frac{2\pi}{\lambda_0}\delta\ell)$$

$\delta\ell(x, y)$ est la distorsion du front d'onde, ou de manière équivalente, la différence de chemin optique causée par la présence de la particule. $T$ est la transmittance de l'échantillon. $\lambda_0$ est la longueur d'onde de la lumière dans le vide. $T$ et $\delta\ell$ sont les deux quantités cartographiées simultanément par QLSI à partir d'une seule mesure. QLSI permet ainsi de remonter à la transmission complexe $t(x, y)$ d'un échantillon. Bien entendu, d'autres unités d'acquisition des images en phase et en intensité que celles faisant intervenir QSLI peuvent être utilisés pour la mise en œuvre de la méthode décrite ci-dessous.

Dans la section suivante, il est expliqué comment un traitement d'une image de $t(x, y)$, c'est-à-dire un traitement des images d'intensité et de front d'onde (un traitement PIWI), peut être exécuté pour déterminer la polarisabilité complexe de particules de toute nature.

*Deuxième partie - traitement PIWI pour déterminer la polarisabilité d'une particule - Description du modèle théorique*

La polarisabilité dipolaire complexe $\alpha$ d'une NP est définie par l'équation 7 :

**[Math 7]**

$$\mathbf{p} = \varepsilon_0 \alpha \mathbf{E}_{\mathrm{ex}}$$

où **p** est l'amplitude complexe du moment dipolaire électrique de la NP et $\mathbf{E}_{ex}$ est l'amplitude complexe du champ électrique local. La NP est placée près d'une interface entre deux milieux semi-infinis, le milieu de la nanoparticule et le milieu du substrat, caractérisés respectivement par leurs indices de réfraction $n$ et $n_S$. Il est connu (voir par exemple [Réf. 6]) de calculer l'image d'un tel dipôle par un microscope, moyennant un formalisme basé sur des transformées de Fourier. Les déposants ont montré pour la première fois qu'il était possible de retrouver la nature même du dipôle, et en particulier la polarisabilité $\alpha$ à partir des seules images en phase $\delta\ell$ et en intensité $T$.

Plus précisément, les déposants ont démontré qu'il est possible de mesurer expérimentalement la polarisabilité $\alpha$ (et d'autres propriétés optiques) à partir des images d'intensité $T$ et de phase $\delta\ell$ mesurées. Pour cela, les déposants ont établi une relation qui lie la polarisabilité complexe $\alpha$ d'une particule et l'image complexe $\frac{t}{t_0}(x,y)$ :

**[Math 8]**

$$\alpha = \frac{i\,(n+n_S)}{k_0}\iint (1-\frac{t}{t_0}\,(x,y))\;dxdy$$

où $t/t_0$ est le coefficient complexe de transmission normalisé et $n$ et $n_S$ sont les indices de réfractions respectivement de l'environnement de la particule et du substrat.

Ainsi, on peut récupérer les parties réelle et imaginaire de la polarisabilité de toute particule unique en tant que fonctions de $T(x, y)$ et $\delta\ell(x, y)$ en utilisant les relations suivantes :

**[Math 9]**

$$\alpha_{\mathrm{r}} = \frac{(n+n_S)}{k_0}\iint \sqrt{T(x,y)}\,\sin\big(k_0\delta\ell(x,y)\big)\,\mathrm{d}x\mathrm{d}y$$

**[Math 10]**

$$\alpha_{\mathrm{i}} = \frac{(n+n_S)}{k_0}\iint [1-\sqrt{T(x,y)}\cos\big(k_0\delta\ell(x,y)\big)\,\mathrm{d}x\mathrm{d}y$$

Les deux mesures de $T(x, y)$ et de $\delta\ell(x, y)$ sont donc suffisantes pour déterminer la polarisabilité complexe. En pratique, il s'agit d'une somme de pixels sur la zone contenant l'image de la particule. Aucune hypothèse n'est nécessaire concernant la nature (diélectrique ou métallique) ou la forme de la particule. Seule est requise la connaissance préalable des indices de réfraction du milieu, $n$ et $n_S$, ainsi que de la longueur d'onde d'éclairement $\lambda_0$.

*Troisième partie - Résultats expérimentaux -Nanosphères d'or*

Afin d'illustrer l'applicabilité du formalisme et de la méthode décrits précédemment, cette section présente des mesures sur des NPs (nanosphères d'or) métalliques et isotropes dans un milieu homogène. Ce cas simple permet de comparer facilement les mesures avec des calculs théoriques utilisant la théorie de Mie.

Des nanosphères d'or de 100 nm de diamètre ont été dispersées sur un substrat de verre puis recouvertes de glycérol ($n$ = 1,5, proche de l'indice du substrat de verre) afin d'obtenir un milieu homogène. Les mesures ont été effectuées avec une longueur d'onde incidente de $\lambda_0$ = 530 nm. Comme la NP est isotrope, la polarisabilité ne dépend pas de l'état de polarisation de la lumière incidente et constitue une quantité physique scalaire.

Les Figures 2a et 2c montrent les images d'OPD et d'intensité mesurées et les Figures 2b et 2d leurs profils respectifs. La taille de la particule étant inférieure à la limite de diffraction, son image s'apparente à une tâche d'Airy. La détermination des parties réelle et imaginaire de la polarisabilité selon les équations 9 et 10, comprend la sommation numérique des pixels d'une combinaison d'images OPD et d'intensité. Bien que, théoriquement, cette somme de pixels doive être effectuée sur une zone infiniment grande, il suffit expérimentalement de faire la somme, par exemple, sur un disque de rayon $R$ choisi de manière à contenir tous les anneaux de diffraction. Dans le cas présent, la polarisabilité mesurée est $\alpha = (-2{,}03 \pm 0{,}26)\cdot 10^6 + i\,(3{,}25 \pm 0{,}26)\cdot 10^6\ \mathrm{nm}^3$. La valeur calculée en utilisant la théorie de Mie, i.e., selon l'équation :

**[Math 11]**

$$\alpha_{\mathrm{th}} = i\,\frac{6\pi n^2}{\lambda_0 k^3}\,a_1$$

où $a_1$ est le coefficient de Mie dipolaire, est $\alpha_{th} = -1{,}59\cdot 10^6 + i\ 3{,}55\cdot 10^6\ \mathrm{nm}^3$, en accord avec les mesures. La légère différence entre les valeurs expérimentales et théoriques peut être expliquée par la dispersion en taille des NP colloïdales utilisées.

Dans ce qui suit, des mesures spectrales de la polarisabilité complexe de la même NP d'or à 100 nm sur toute la plage visible sont présentées. Des images d'intensité et d'OPD de la NP ont été enregistrées par QLSI pour un ensemble de longueurs d'onde d'illumination différentes. Pour chaque longueur d'onde, la polarisabilité complexe a été extraite. Les mesures ont été effectuées dans un milieu homogène (NP recouvert de glycérol sur un substrat de verre) et les résultats comparés à la polarisabilité calculée en utilisant la théorie de Mie. Les parties réelles, imaginaires et l'argument de la polarisabilité sont illustrés aux Figures 3a à 3c, respectivement. Les spectres de polarisabilité mesurés reproduisent bien ceux calculés. La partie imaginaire (section proportionnelle à l'extinction) présente un pic autour $\lambda_{res}$ = 610 nm, ce qui correspond à la longueur d'onde de la résonance localisée du plasmon de surface (LSPR). Cette résonance est associée à une transition abrupte des valeurs de Re ($\alpha$) et Arg ($\alpha$).

*Particules métalliques versus particules diélectriques*

Dans cette section, la capacité du traitement PIWI à discriminer des NP de composition différente est démontrée, ainsi que l'effet de la dispersion de taille de NP sur les polarisabilités mesurées. Des expériences ont été menées sur des nanoparticules d'or et de polystyrène dispersés de manière aléatoire sur le même substrat de verre. Les NPs proviennent de solutions colloïdales commerciales supposées être de forme et de taille monodisperses (nanosphères de 100 nm de diamètre pour l'or et de 200 nm pour le polystyrène). L'échantillon a été analysé par traitement PIWI pour déterminer la polarisabilité d'un ensemble de NPs sélectionnées de manière aléatoire. Les mesures ont ensuite été corrélées avec des images au microscope électronique à balayage (SEM), ce qui a permis de confirmer la nature des NPs ainsi que leurs tailles et morphologies réelles. Les résultats sont présentés dans la Figure 4. Les polarisabilités mesurées sont présentées sur le plan complexe (partie imaginaire par rapport à la partie réelle de la polarisabilité) dans la Figure 4a.

Chaque point correspond à une NP. Les ronds noirs correspondent au polystyrène et les ronds gris correspondent à l'or, comme déterminé par SEM. Des exemples d'images SEM en corrélation avec des images d'OPD et d'intensité sont présentés sur les Figures 4b, 4c et 4d, respectivement. Le contraste des NPs en polystyrène (indiqué par des flèches sur les images MEB) est inférieur à celui de l'or (indiqué par un ergot). On peut observer que les NPs en or et en polystyrène occupent deux domaines distincts du plan complexe (Figure 4a), associés à différentes dispersions des valeurs de polarisabilité. Dans le cas de l'or, la dispersion ne provient pas d'erreurs de mesure. Elle provient principalement de la dispersion dans les diamètres de NP, qui varient de 110 nm à 140 nm selon les mesures au Microscope Electronique à Balayage (MEB). Ces résultats illustrent l'utilité du traitement PIWI et du travail dans le plan complexe de la polarisabilité $\alpha$ pour distinguer différents types de nanoparticules.

*Indépendance de la mise au point (focalisation)*

Dans cette section est démontré, contre-intuitivement, que le changement de mise au point du microscope n'affecte pas l'estimation de la polarisabilité complexe. En d'autres termes, les intégrations ou sommations de pixels des images d'une NP suivant les équations 9 et 10 sont indépendantes de la mise au point. Ceci peut être montré de manière théorique et les mesures confirment cette prédiction. L'effet de la défocalisation sur la détermination de la polarisabilité d'une NP d'or à 100 nm a été déterminé en acquérant des images d'OPD et d'intensité à différentes positions z, comme illustré à la Figure 5a.

La position z correspond à une position axiale de l'échantillon (selon un axe optique du système optique 120) par rapport à une position de référence pour laquelle le plan d'analyse et le plan de l'échantillon contenant la particule sont optiquement conjugués.

Comme prévu par la théorie, les images OPD et d'intensité dépendent fortement de la mise au point. Néanmoins, les parties réelles et imaginaires extraites de la polarisabilité pour chaque position de z illustrées par la Figure 5b, ne montrent aucune dépendance vis-à-vis de la défocalisation z plus grande que les barres d'erreur.

Cette observation offre un moyen d'améliorer la précision des mesures de polarisabilité en faisant la moyenne d'une série d'images d'intensité et d'OPD prises à différentes positions z (comme la moyenne de la série d'images présentée dans la Figure. 5a). Puisque toutes ces images donnent la même estimation $\alpha$, leur moyenne donne toujours la même estimation, mais avec au moins deux avantages. Tout d'abord, un gain de $\sqrt{N}$ est obtenu dans le rapport signal sur bruit, où $N$ est le nombre d'images. Le second avantage est que la moyenne des images réduit l'extension spatiale des anneaux de diffraction de la tâche d'Airy, permettant ainsi la somme des pixels sur une zone réduite. Cela permet par exemple d'étudier des nanoparticules plus proches les unes des autres et comportant des anneaux d'Airy qui se chevaucheraient sans un tel moyennage. Dans le cas de la Figure 5, en utilisant cette méthode, la barre d'erreur de Re ($\alpha$) a diminué de $4\cdot10^{-3}$ à $1{,}7\cdot10^{-3}$ (en unité de $\lambda^3$) lorsque la moyenne des polarisabilités est effectuée à différentes positions z.

*Indépendance de l'ouverture numérique*

Dans cette section, il est expérimentalement démontré que modifier l'ouverture numérique (ON, ou NA, pour « Numerical Aperture ») de l'objectif du microscope n'affecte pas l'estimation de la polarisabilité complexe. Cet effet est également prédit par la théorie. Pour étudier expérimentalement l'effet de l'ON, des images d'OPD et d'intensité de NP d'or à 100 nm ont été enregistrées pour différentes valeurs d'ON à l'aide d'un objectif de microscope avec une variation d'ON de 0,6 à 1,3 (voir Figure 6a). De toute évidence, le schéma de diffraction dépend fortement de l'ON utilisée. Néanmoins, l'ON n'affecte pas la polarisabilité complexe déterminée à partir des images, comme indiqué sur la Figure 6b.

*Le cas des nanoparticules anisotropes*

Cette section est consacrée à la mesure de la polarisabilité complexe de NPs ayant des formes anisotropes. Dans ce cas, les propriétés optiques de la NP dépendent de la polarisation de la lumière incidente. Ainsi, la polarisabilité de la NP n'est plus scalaire, mais correspond à un tenseur 2x2.

Des nanobâtonnets d'or fabriqués sur un substrat de verre ont été étudiés. Les positions des nanobâtonnets sont aléatoires mais elles ont la même orientation. La densité de nanobâtonnets est relativement faible afin d'obtenir une séparation importante et de permettre la caractérisation de nanobâtonnets isolés. L'illumination étant à incidence normale, la méthode de mesure est concentrée dans ce cas à la mesure de la polarisabilité dans le plan. Pour la forme considérée, deux polarisations sont privilégiées : une le long du grand axe et une autre le long du petit axe du nanobâtonnet. Ainsi, les valeurs propres de la polarisabilité dans le plan peuvent être extraites, selon l'expression suivante :

**[Math 12]**

$$\alpha = \begin{pmatrix} \alpha_{xx} & 0 \\ 0 & \alpha_{yy} \end{pmatrix}$$

Pour ce faire, la lumière d'éclairage a été polarisée le long du grand axe (respectivement, de l'axe court) et les images d'OPD et d'intensité ont été enregistrées et traitées pour extraire $\alpha_{xx}$ (respectivement $\alpha_{yy}$). Les spectres de parties réelles, imaginaires, et arguments de la polarisabilité le long des axes long et court des nanobâtonnets ont été comparés avec les polarisabilités calculées à l'aide de la méthode DDA (pour « Discrete Dipole Approximation », une technique numérique appropriée pour prendre en compte l'effet d'un substrat). La comparaison a montré un bon accord avec les expériences.

Ces résultats montrent qu'un traitement PIWI est également apte à caractériser des structures plus complexes que des sphères.

*Quatrième partie : Traitement PIWI pour déterminer la polarisabilité d'une distribution dense de nanoparticules*

Dans la section précédente, des NPs clairsemées, séparées par des distances beaucoup plus grandes que la limite de diffraction optique, ont été considérées, ce qui a permis d'étudier des NP uniques. En pratique, les applications n'impliquent pas toujours des NP isolées mais des distributions parfois denses et uniformes, réalisées par exemple par lithographie par faisceau d'électrons, par lithographie micellaire à copolymère bloc, par lithographie par nanosphères, etc. Dans ce cas, la couche de NPs peut être vue comme un support 2D efficace caractérisé par une polarisabilité 2D effective $\alpha_{2D}$ qui a la dimension d'une longueur (et non d'un volume). La caractérisation des systèmes 2D est plus facile et plus courante dans la littérature que l'étude d'une seule NP. En particulier, des mesures basées sur la transmission et la réflexion combinées à des équations de Fresnel modifiées ont déjà été rapportées dans la littérature pour caractériser les propriétés optiques des couches. (cf. articles de C.L. Holloway *et al.,* [Réf. 7], de A. Mendoza-Galván *et al.,* [Réf. 8], de R. Ogier *et al.,* [Réf. 9], et de G. Lavigne *et al.,* [Réf. 10].

Dans la prochaine section, il est démontré que l'interférométrie QLSI est également capable de caractériser une polarisabilité $\alpha_{2D}$.

*Description du modèle théorique*

Les bases théoriques du traitement PIWI permettent de remonter à la polarisabilité linéaire effective d'une distribution dense de NPs.

Ici, la distribution de NPs est considérée comme une couche uniforme et infiniment mince placée à l'interface entre deux milieux caractérisés par leurs indices de réfraction $n$ et $n_S$. La couche 2D de NPs est décrite via sa polarisabilité complexe surfacique $\alpha_{2D}$. définie par l'équation :

**[Math 13]**

$$\mathbf{P}_{2\mathrm{D}} = \varepsilon_0\, \alpha_{2\mathrm{D}} \mathbf{E}_0$$

où $\mathbf{P}_{2D}$ est l'amplitude complexe du vecteur de polarisation surfacique induite par la distribution 2D des NPs et $\mathbf{E}_0$ est l'amplitude du champ électrique incident. La dimension de $\mathbf{P}_{2D}$ est une longueur [m] et est liée à la polarisabilité effective d'une seule NP $\alpha_{\mathrm{eff}}$ par $\alpha_{2D} = \rho\alpha_{\mathrm{eff}}$, où $\rho$ est la densité surfacique de NPs. Dans ce cas, $\alpha_{\mathrm{eff}}$ n'est pas nécessairement la polarisabilité de la NP isolée, notamment si les NPs sont très proches les unes des autres et présentent un couplage optique en champ proche. La quantité mesurée dans ce cas est plutôt une polarisabilité effective de NP dans la couche.

Ce système peut être modélisé à l'aide d'équations de Fresnel modifiées. Un tel modèle a précédemment été utilisé pour déterminer la conductivité optique complexe 2D ($\sigma_{2D}$) de matériaux 2D (graphène et $MoS_2$ (cf. article de S. Khadir *et al.,* [Réf. 5]). Une conductivité 2D est une autre quantité physique pouvant être utilisée pour caractériser un matériau 2D. Elle est définie comme suit $\mathbf{J}_{2D} = \sigma_{2D}\mathbf{E}$, où $\mathbf{J}_{2D}$ est le courant électronique 2D densité, et $\mathbf{E}$ est le champ électrique total à l'interface. Ces formalismes considèrent une illumination incidente normale et $\mathbf{E}$ est contenu dans la couche 2D. La conductivité optique complexe et la polarisabilité sont équivalentes, car elles sont liées par $\sigma_{2D} = \varepsilon_0 c[(n + n_S)^{-1} + i(k\alpha_{2D})^{-1}]^{-1}$. En cas d'incidence normale, le coefficient de transmission $t(x, y)$ d'un tel système est lié à la polarisabilité complexe $\alpha_{2D}$. comme décrit dans l'article de S. Khadir et *al.,* [Réf. 5], par l'équation :

[Math 14]

$$t = \frac{2n}{n_S + n - ik_0\alpha_{2D}}$$

En normalisant cette quantité par la transmission en l'absence de la couche, à savoir :

[Math 15]

$$t_0 = \frac{2n}{n_S + n}$$

on obtient l'équation 16 suivante :

[Math 16]

$$\frac{t}{t_0} = \frac{1}{1 - \frac{ik_0\alpha_{2D}}{n_S + n}}$$

Ainsi, la polarisabilité complexe $\alpha_{2D}$. peut être exprimée en fonction du coefficient de transmission normalisé mesuré $t/t_0$ par QLSI, selon l'équation

[Math 17]

$$\alpha_{2D} = \frac{i\lambda_0(n_S + n)}{2\pi}\left(\frac{t_0}{t} - 1\right)$$

où

[Math 18]

$$\frac{t_0}{t} = \frac{1}{\sqrt{T}} e^{-i\frac{2\pi}{\lambda_0}\delta\ell}$$

et où T et $\delta\ell$ sont les images de transmission et OPD mesurées.

Comme $\alpha_{2D} = \rho\alpha_{eff}$, la polarisabilité effective d'une seule NP (qui prend en compte le couplage entre les NP dans la couche) peut être exprimée selon :

[Math 19]

$$\alpha_{eff} = \frac{i\lambda_0(n_S + n)}{2\pi\rho}\left(\frac{t_0}{t} - 1\right)$$

En utilisant l'équation 19, les parties réelles $\alpha_{r,eff}$ et imaginaires $\alpha_{i,eff}$ de $\alpha_{eff}$ peuvent être exprimées en fonction des quantités mesurées par QLSI, T et δl :

[Math 20]

$$\alpha_{r,eff} = \frac{\lambda_0(n_S + n)}{2\pi\rho}\frac{1}{\sqrt{T}}\sin\left(\frac{2\pi}{\lambda_0}\delta\ell\right)$$

[Math 21]

$$\alpha_{\mathrm{i,eff}} = \frac{\lambda_0(n_S + n)}{2\pi\,\rho}\;[\frac{1}{\sqrt{T}}\cos(\frac{2\pi}{\lambda_0}\delta\ell)]$$

*Résultats expérimentaux*

Les mesures ont été effectuées sur une distribution dense de nanobâtonnets d'or déposés sur un substrat de verre. La densité surfacique des NPs est $\pi$ = $1.9\cdot10^{-5}$ $nm^{-2}$. Les mesures ont été effectuées pour les deux états de polarisation : le long des axes long et court du nanobâtonnet. Les parties réelles et imaginaires effectives estimées et l'argument de la polarisabilité utilisant le formalisme décrit ci-dessus ont été mesurées. La partie imaginaire (proportionnelle à la section efficace d'extinction) reproduit bien les pics de résonance du plasmon le long des axes court et long du nanobâtonnet. Ces résonances sont représentées par une transition abrupte pour la partie réelle et l'argument de la polarisabilité. Ici aussi, les résultats expérimentaux sont comparés à la polarisabilité calculée pour un seul nanobâtonnet obtenue par DDA (les mêmes courbes de simulation que celle de la section précédente). L'accord est assez bon, montrant que la polarisabilité effective déterminée ici est équivalente à celle mesurée sur une NP isolée dans la section précédente. Toutefois, les valeurs de polarisabilité dans le cas d'une distribution dense de NPs sont légèrement supérieures à celles de NPs isolées, ce qui peut être attribué à la contribution du couplage optique en champ proche entre les NP.

*Cinquième partie : Applications à la caractérisation de l'interaction d'une molécule cible avec une particule.*

La Figure 7 représente la partie réelle de la polarisabilité d'un nano-bâtonnet d'or en fonction de la longueur d'onde mesuré par interférométrie à décalage quadrilatéral. Un saut abrupt est observé vers 700 nm, correspondant à la résonance plasmonique de la nanoparticule. Un tel saut abrupt permet d'obtenir une sonde sensible de détection, en mesurant la variation au cours du temps de cette propriété optique de la nanoparticule en présence de molécules cibles dans l'échantillon.

La Figure 8 illustre un exemple d'échantillon 10 susceptible d'être analysé par la méthode de détection selon un ou plusieurs exemples de réalisation de la présente description. Dans cet exemple, l'échantillon 10 comprend un substrat 16 transparent en verre auquel sont attachées des nanoparticules d'or 11, de façon covalente. De façon alternative, les particules de l'échantillon peuvent être fabriquées par voie chimique et déposées sur le substrat, par exemple par évaporation de solvant, par enduction centrifuge (spin coating), ou bien lithographiées via le dépôt d'un film métallique par exemple, par lithographie par faisceaux d'électrons, ou par lithographie assistée par nanosphères (ou « nanosphere lithography » selon l'appellation anglo-saxonne).

Dans cet exemple, les nanoparticules 11 sont fonctionnalisées avec des protéines d'intérêt, *i.e.,* des anticorps 13 dans ce cas, présentant une certaine affinité pour des molécules cibles 12, et reliés aux nanoparticules 11 par des espaceurs (ou linkers) 14. Un circuit microfluidique 15 permet l'apport des molécules cibles 12 à détecter dans l'échantillon 10. Dans cet exemple, cet apport s'effectue en faisant circuler une solution comprenant les molécules cibles 12 dans le circuit microfluidique 15.

Un tel échantillon 10 peut par exemple être implémenté dans un exemple de dispositif 100 de détection tel que décrit sur la Figure 1, configuré pour déterminer, au cours du temps, au moins une propriété optique d'au moins une particule.

L'unité de calcul 150 est configurée, en outre, pour la caractérisation de l'interaction avec ladite au moins une molécule cible 12 sur la base d'une mesure de la variation au cours du temps de ladite au moins une propriété optique.

*Détection d'interactions moléculaires*

Selon un exemple, la caractérisation de l'interaction avec une molécule cible comprend la détection d'interactions entre une particule et une molécule cible, ou entre une molécule ou ligand attaché(e) à une particule. La détection revient à apporter une réponse qualitative à la question de savoir si des particules et des molécules cibles ont une affinité, ou respectivement, si des molécules A (pour analyte ou molécule cible) et des molécules L (pour ligand) ont une affinité. De telles molécules A et L sont, par exemple, respectivement référencées 12 et 13 dans la Figure 8.

Un exemple de détection d'interaction entre molécules A et L est détaillé ci-après, et illustré par les Figures 8 et la Figure 9a.

Dans une première étape, on injecte une solution ne contenant pas de molécules cibles 12 dans un canal microfluidique 15 relié à un substrat 16 sur lequel des particules 11 sont attachées. Les particules 11 sont fonctionnalisées par des molécules de ligand L, référencées 13, via un espaceur 14 reliant le ligand 13 à la particule 11.

On mesure un observable *m* correspondant à l'une des propriétés optiques que l'on caractérise pour une ou

plusieurs particules 11 en présence de cette solution, à un temps $t_0$ bien déterminé après le début de l'injection de la solution. La ou lesdites propriétés optiques comprennent par exemple la partie réelle, la partie imaginaire, l'argument ou la norme de la polarisabilité complexe de la ou des particules.

Dans une deuxième étape, on injecte le même liquide à l'exception qu'il contient cette fois les molécules cibles A, référencées 12. On mesure les nouvelles valeurs d'observables *m* des mêmes particules 11, au même temps déterminé $t_0$. Une variation de la valeur de l'observable *m* peut être due à l'accrochement des molécules cibles 12 sur les particules 11, mais aussi à la simple présence des molécules cibles 12 en solution qui en change l'indice, lorsque, par exemple, la concentration en molécules cibles 12 est élevée. Cette deuxième contribution ne traduit pas un attachement entre molécules cibles 12 et ligands 13. Cet effet du milieu (ou « *bulk effect* »), correspondant au niveau de bruit, peut être quantifié en répétant les mesures correspondant aux deux étapes (avec et sans molécule cible 12), en l'absence de ligand 13 sur les particules 11. On obtient ainsi la variation de valeur de l'observable due au *bulk effect,* qui devra être retranchée à la variation de la valeur d'observable précédente. Une valeur d'observable mesurée au-dessus du niveau de bruit du système sera l'indication que les molécules cibles 12 et les ligands 13 ont une affinité.

*Mesures de concentrations moléculaires*

La séquence de mesures décrite précédemment peut être appliquée avec *N* solutions d'analytes A ou molécule cibles de concentrations connues $[A]_n$, $n \in [1, N]$, successivement. On obtient ainsi *N* valeurs d'observables $m_n$. Les données recueillies ($[A]_n$ , $m_n$) constituent une courbe de calibration, représentée à la Figure 9b.

Une solution contenant des molécules cibles et de concentration inconnue en molécules cibles est ensuite injectée dans l'échantillon. La valeur *m* est mesurée et reportée sur la courbe de calibration afin de déterminer la concentration en molécules cibles.

*Mesures de constante d'affinité $K_A$*

Dans le cas de la caractérisation de l'interaction entre un analyte A et un ligand L attaché à la particule, la constante d'affinité peut être définie par l'équation (22) suivante :

**[Math 22]**

$$K_{\mathrm{A}} = \frac{k_{\mathrm{a}}}{k_{\mathrm{d}}} = \frac{[\mathrm{AL}]}{[\mathrm{A}][\mathrm{L}]}$$

dans laquelle $k_a$ est la constante d'association du complexe AL (ou complexe « analyte - ligand ») et $k_d$ est la constante de dissociation du complexe AL.

La constante d'affinité $K_A$ peut être déterminée en mesurant l'observable $m_{eq,i}$ pour toute une série de concentrations en analyte $[A]_i$ à l'état d'équilibre, c'est à dire en attendant suffisamment longtemps pour que l'observable ne varie plus au court du temps. Le tracé de $m_{eq,i}$ en fonction de $[A]_i$ peut alors avoir l'aspect de la courbe représentée à la Figure 10.

Un ajustement ou fit de cette courbe faisant intervenir l'équation (22) peut alors permettre de déterminer la constante d'affinité $K_A$.

*Mesures de constante d'association $k_a$ et de dissociation $k_d$*

Les constantes d'association $k_a$ et dissociation $k_d$ sont définies par la réaction chimique (1) :

**[Chem 1]**

$$A + L \underset{k_{\mathrm{a}}}{\overset{k_{\mathrm{d}}}{\leftrightarrows}} AL$$

Elles peuvent être mesurées en suivant l'évolution temporelle du signal de l'observable au cours du temps, pour une série de concentrations $m(t; c_i)$. Un exemple de cette évolution pour 5 différentes concentrations en analyte (10, 20, 30, 40 et 50 mg/mL) est illustré par la Figure 11a, où les flèches en début et fin de mesure représentent, respectivement, le début et la fin de l'injection d'une solution d'analytes ou molécule cibles dans un échantillon. La méthode consiste tout

d'abord à ajuster ou *fitter* par une exponentielle croissante la variation de $m(t)$ suivant l'injection considérée (cf. Figure 11a).

Les coefficients $p_i$ de telles exponentielles correspondent aux pentes des droites obtenues en traçant la dérivée de l'observable m par rapport au temps en fonction de m, pour une série de concentrations analyte ou molécule cible, comme illustré à la Figure 11b.

Les coefficients $p_i$ de l'exponentielle sont ensuite tracés en fonction de la concentration $c_i$ et ajustés ou fittés par une droite illustrée à la Figure 11c, et dont l'équation est :

**[Math 23]**

$$p = k_a . c + k_d$$

Cette méthode peut donc permettre de déterminer à la fois $k_a$ et $k_d$. Il est à noter que $K_A$ peut aussi être déterminée de cette façon puisque $K_A = k_a/k_d$. Cette méthode ne permet généralement pas de déterminer $k_d$ avec précision. Un ajustement ou fit par une exponentielle décroissante de $m(t)$ après arrêt de l'injection permet une estimation plus précise de $k_g$.

REFERENCES

[Réf. 1] A. Arbouet et al. « Direct Measurement of the Single-Metal-Cluster Optical Absorption", Phys. Rev. Lett. (2004), 93, p. 127401.

[Réf. 2] B.J. Davis et al. "Robust determination of the anisotropic polarizability of nanoparticles using coherent confocal microscopy", Journal of the Optical Society of America A (2008), 25, pp. 2102-2113.

[Réf. 3] P. Van Duyne et al., "Single Silver Nanoparticles as Real-Time Optical Sensors with Zeptomole Sensitivity", Nano Lett. (2003), 3, 8, pp. 1057-1062.

[Réf. 4] J. Primot et al. "Extended Hartmann Test Based on the Pseudoguiding Property of a Hartmann Mask Completed by a Phase Chessboard", Applied Optics (2000), 39, p. 5715.

[Réf. 5] S. Khadir et al. "Optical Imaging and Characterization of Graphene and Other 2D Materials Using Quantitative Phase Microscopy", ACS Photonics (2017), 4, p. 3130.

[Réf. 6] S. Khadir et al. "Quantitative model of the image of a radiating dipole through a microscope", Journal of the Optical Society of America A, 36, (2019), pp. 478-484.

[Réf. 7] C.L. Holloway et al. "A discussion on the interpretation and characterization of metafilms/metasurfaces: The two-dimensional equivalent of metamaterials", Metamaterials (2009) 3, p. 100.

[Réf. 8] A. Mendoza-Galván et al. "Optical response of supported gold nanodisks", Optics Express (2011), 19, p. 12093.

[Réf. 9] R. Ogier et al. "Near-Complete Photo Spin Selectivity in a Metasurface of Anisotropic Plasmonic Antennas", Physical Review X 5 (2015), 5, p. 041019.

[Réf. 10] G. Lavigne et al. "Susceptibility Derivation and Experimental Demonstration of Refracting Metasurfaces Without Spurious Diffraction", IEEE Transactions on Antennas and Propagation (2018), 66, p. 1321.


## Revendications

**1.** Méthode de caractérisation optique d'au moins une particule (11) présente dans un échantillon (10) comprenant :

- l'éclairage dudit échantillon (10) au moyen d'un faisceau lumineux, l'échantillon (10) étant positionné dans l'espace objet d'un système optique (120) ;
- l'acquisition d'au moins une image en phase et d'au moins une image en intensité de ladite au moins une particule (11) éclairée par le faisceau lumineux, l'acquisition étant faite dans un plan d'analyse agencé dans l'espace image du système optique (120) ;
- le calcul, à partir de ladite au moins une image en phase et de ladite au moins une image en intensité, d'une image combinée, ladite image combinée étant obtenue à partir de la transmission complexe normalisée, de la partie réelle de la transmission complexe normalisée ou de la partie imaginaire de la transmission complexe normalisée ; la méthode étant **caractérisée en ce que** qu'elle comprend en outre :

  - la sommation de points de ladite image combinée sur un champ donné de l'image combinée comprenant

une image de ladite au moins une particule ;
- la détermination d'au moins une propriété optique de ladite au moins une particule (11) à partir de la dite somme, ladite au moins une propriété optique comprenant l'une au moins de la polarisabilité dipolaire complexe, la section efficace d'absorption, la section efficace de diffusion, la section efficace d'extinction.

**2.** Méthode selon la revendication 1, dans laquelle l'au moins une image en intensité et l'au moins une image en phase sont acquises simultanément.

**3.** Méthode selon l'une quelconque des revendications précédentes, comprenant en outre :

- la variation de l'ouverture numérique du système optique permettant de générer une pluralité d'ouvertures numériques ; et
- l'acquisition d'une pluralité d'images en intensité et d'images en phase auxdites ouvertures numériques.

**4.** Méthode selon l'une quelconque des revendications précédentes, comprenant en outre :

- la variation de la distance entre l'échantillon et le système optique permettant de générer une pluralité de distances ; et
- l'acquisition d'une pluralité d'images en intensité et d'images en phase pour ladite pluralité de distances.

**5.** Méthode de caractérisation de l'interaction d'au moins une molécule cible (12) avec ladite au moins une particule (11), comprenant :

- une caractérisation optique de ladite au moins une particule (11) selon l'une quelconque des revendications précédentes pour déterminer, au cours du temps, au moins une desdites propriétés optiques ;
- la caractérisation de l'interaction avec ladite au moins une molécule cible (12) sur la base d'une mesure de la variation au cours du temps de ladite au moins une propriété optique.

**6.** Méthode selon la revendication 5, dans laquelle ladite au moins une propriété optique comprend au moins l'un de la partie réelle, de l'argument, de la norme, ou de la partie imaginaire de la polarisabilité complexe de l'au moins une particule (11).

**7.** Méthode selon l'une quelconque des revendications 5 ou 6, dans laquelle ladite au moins une particule (11) est une particule métallique et l'éclairage de l'échantillon (10) comprend une illumination dans une plage de longueurs d'onde comprenant une longueur d'onde de résonance plasmonique de l'au moins une particule (11).

**8.** Méthode selon l'une quelconque des revendications 5 à 7, dans laquelle l'éclairage de l'échantillon (10) comprend une illumination dans une plage de longueurs d'onde comprenant une longueur d'onde de résonance de Mie de l'au moins une particule (11).

**9.** Méthode selon l'une quelconque des revendications 5 à 8,comprenant en outre une étape préalable de calibration de ladite propriété optique en fonction de la concentration de l'au moins une molécule cible (12), dans laquelle la calibration est effectuée en mesurant la propriété optique à un temps prédéterminé pour une séries d'échantillons de concentrations connues en molécule cible (12), et
dans laquelle la caractérisation de l'interaction avec ladite au moins une molécule cible (12) comprend une détermination de la concentration de ladite molécule cible (12) dans l'échantillon (10), basée sur ladite calibration.

**10.** Méthode selon l'une quelconque des revendications 5 à 9, comprenant en outre:

- la formation d'une pluralité d'échantillons comprenant ladite au moins une particule et ladite au moins une molécule cible, à une pluralité de concentrations connues ;
- la caractérisation optique de ladite au moins une particule pour chaque échantillon de ladite pluralité d'échantillons ; et dans laquelle :

  - la caractérisation de l'interaction avec ladite au moins une molécule cible (12) comprend une détermination de la constante d'affinité et/ou d'association et/ou de dissociation d'une molécule cible (12) avec l'au moins une particule (11) ou avec une molécule (13) préalablement attachée à l'au moins une particule (11),

dans laquelle ladite constante d'affinité et/ou d'association et/ou de dissociation est déterminée sur la base de la variation au cours du temps de ladite propriété optique pour ladite pluralité d'échantillons.

**11.** Dispositif (100) de caractérisation optique d'au moins une particule (11) présente dans un échantillon (10) comprenant :

- une source lumineuse (110) pour la formation d'un faisceau d'éclairage dudit échantillon (10) ;
- un système optique (120), l'échantillon (10) étant positionné, en opération, dans l'espace objet dudit système optique (120);
- une unité d'acquisition (130, 140) d'au moins une image en phase et d'au moins une image en intensité de ladite au moins une particule (11) éclairée par le faisceau lumineux, l'acquisition étant faite dans un plan d'analyse agencé dans l'espace image dudit système optique (120) ; et
- une unité de calcul (150) configurée pour :

  - le calcul, à partir de ladite au moins une image en phase et de ladite au moins une image en intensité, d'une image combinée, ladite image combinée étant obtenue à partir de la transmission complexe normalisée, de la partie réelle de la transmission complexe normalisée ou de la partie imaginaire de la transmission complexe normalisée ; **caractérisé en ce que** l'unité de calcul (150) est configurée en outre pour:

    - la sommation de points de ladite image combinée sur un champ donné de l'image combinée comprenant une image de ladite au moins une particule ;
    - la détermination d'au moins une propriété optique de ladite au moins une particule (11) à partir de ladite somme, ladite au moins une propriété optique comprenant l'une au moins de la polarisabilité dipolaire complexe, la section efficace d'absorption, la section efficace de diffusion, la section efficace d'extinction.

**12.** Dispositif selon la revendication 11, dans lequel l'unité d'acquisition (130, 140) comprend un interféromètre à décalage multilatéral (140).

**13.** Dispositif selon l'une quelconque des revendications 11 ou 12, dans lequel le système optique (120) comprend un objectif de microscope.

**14.** Dispositif selon l'une quelconque des revendications 11 à 13, dans lequel le système optique (120) comprend une ouverture numérique variable et ladite unité de calcul (150) est configurée pour la détermination de ladite au moins une propriété optique à partir d'une pluralité d'images en phase et d'images en intensité acquises pour une pluralité d'ouvertures numériques.

**15.** Dispositif selon l'une quelconque des revendications 11 à 14, dans lequel ladite unité de calcul (150) est configurée pour la détermination de ladite au moins une propriété optique à partir d'une pluralité d'images en phase et d'images en intensité acquises pour une pluralité de distances entre l'échantillon et le système optique.

**16.** Dispositif pour la caractérisation de l'interaction d'au moins une molécule cible (12) avec au moins une particule (11) présente dans un échantillon (10), comprenant :

- un dispositif (100) de caractérisation optique de ladite au moins une particule (11) selon l'une quelconque des revendications 11 à 15 configuré pour déterminer, au cours du temps, au moins une propriété optique de ladite au moins une particule; et dans lequel :

  - ladite unité de calcul (150) est configurée, en outre, pour la caractérisation de l'interaction avec ladite au moins une molécule cible (12) sur la base d'une mesure de la variation au cours du temps de ladite au moins une propriété optique.

**17.** Dispositif (100) selon la revendication 16, dans laquelle ladite au moins une propriété optique comprend au moins l'un de la partie réelle, de l'argument, de la norme, ou de la partie imaginaire de la polarisabilité complexe de l'au moins une particule (11).

**18.** Dispositif (100) selon l'une quelconque des revendications 16 ou 17, comprenant en outre un circuit microfluidique (15) pour apporter l'au moins une molécule cible (12) dans l'échantillon (10).

**Patentansprüche**

1. Verfahren zur optischen Charakterisierung mindestens eines Teilchens (11), das in einer Probe (10) vorhanden ist, umfassend:

   - das Beleuchten der Probe (10) mittels eines Lichtstrahls, wobei die Probe (10) in dem Objektraum eines optischen Systems (120) positioniert ist;
   - das Erfassen mindestens eines Phasenbilds und mindestens eines Intensitätsbilds des mindestens einen von dem Lichtstrahl beleuchteten Teilchens (11), wobei das Erfassen in einer Analyseebene erfolgt, die in dem Bildraum des optischen Systems (120) angeordnet ist;
   - das Berechnen, ausgehend von dem mindestens einen Phasenbild und von dem mindestens einen Intensitätsbild, eines kombinierten Bilds, wobei das kombinierte Bild ausgehend von der normalisierten komplexen Transmission des Realteils der normalisierten komplexen Transmission oder des Imaginärteils der normalisierten komplexen Transmission erhalten wird; wobei das Verfahren **dadurch gekennzeichnet ist, dass** es ferner umfasst:

     - das Summieren von Punkten des kombinierten Bilds auf einem gegebenen Bereich des kombinierten Bilds, das ein Bild des mindestens einen Teilchens umfasst;
     - das Bestimmen mindestens einer optischen Eigenschaft des mindestens einen Teilchens (11) ausgehend von der Summe, wobei die mindestens eine optische Eigenschaft mindestens eine(n) unter der komplexen Dipol-Polarisierbarkeit, dem Absorptionsquerschnitt, dem Streuquerschnitt, dem Extinktionsquerschnitt umfasst.

2. Verfahren nach Anspruch 1, wobei das mindestens eine Intensitätsbild und das mindestens eine Phasenbild gleichzeitig erfasst werden.

3. Verfahren nach einem der vorhergehenden Ansprüche, umfassend ferner:

   - das Ändern der numerischen Apertur des optischen Systems, was es ermöglicht, eine Vielzahl von numerischen Aperturen zu erzeugen; und
   - das Erfassen einer Vielzahl von Intensitätsbildern und Phasenbildern mit den numerischen Aperturen.

4. Verfahren nach einem der vorhergehenden Ansprüche, umfassend ferner:

   - das Ändern des Abstands zwischen der Probe und dem optischen System, was es ermöglicht, eine Vielzahl von Abständen zu erzeugen; und
   - das Erfassen einer Vielzahl von Intensitätsbildern und Phasenbildern für die Vielzahl von Abständen.

5. Verfahren zur Charakterisierung der Wechselwirkung mindestens eines Zielmoleküls (12) mit dem mindestens einen Teilchen (11), umfassend:

   - eine optische Charakterisierung des mindestens einen Teilchens (11) nach einem der vorhergehenden Ansprüche, um im Laufe der Zeit mindestens eine der optischen Eigenschaften zu bestimmen;
   - die Charakterisierung der Interaktion mit dem mindestens einen Zielmolekül (12) auf der Grundlage einer Messung der Änderung der mindestens einen optischen Eigenschaft im Laufe der Zeit.

6. Verfahren nach Anspruch 5, wobei die mindestens eine optische Eigenschaft mindestens eine(n) unter dem Realteil, dem Argument, der Norm oder dem Imaginärteil der komplexen Polarisierbarkeit des mindestens einen Teilchens (11) umfasst.

7. Verfahren nach einem der Ansprüche 5 oder 6, wobei das mindestens eine Teilchen (11) ein Metallteilchen ist und die Beleuchtung der Probe (10) eine Illumination in einem Wellenlängenbereich umfasst, der eine Plasmonenresonanzwellenlänge des mindestens einen Teilchens (11) umfasst.

8. Verfahren nach einem der Ansprüche 5 bis 7, wobei die Beleuchtung der Probe (10) eine Illumination in einem Wellenlängenbereich umfasst, der eine Mie-Resonanzwellenlänge des mindestens einen Teilchens (11) umfasst.

9. Verfahren nach einem der Ansprüche 5 bis 8, umfassend ferner einen vorherigen Schritt zur Kalibrierung der

optischen Eigenschaft in Abhängigkeit von der Konzentration des mindestens einen Zielmoleküls (12), wobei die Kalibrierung durchgeführt wird, indem die optische Eigenschaft zu einer vorbestimmten Zeit für eine Reihen von Proben mit bekannten Konzentrationen des Zielmoleküls (12) gemessen wird, und
wobei die Charakterisierung der Wechselwirkung mit dem mindestens einen Zielmolekül (12) eine Bestimmung der Konzentration des Zielmoleküls (12) in der Probe (10) umfasst, die auf der Kalibrierung beruht.

**10.** Verfahren nach einem der Ansprüche 5 bis 9, umfassend ferner:

- das Bilden einer Vielzahl von Proben, die das mindestens eine Teilchen und das mindestens eine Zielmolekül umfassen, mit einer Vielzahl von bekannten Konzentrationen;
- die optische Charakterisierung des mindestens einen Teilchens für jede Probe der Vielzahl von Proben; und wobei:

  - die Charakterisierung der Wechselwirkung mit dem mindestens einen Zielmolekül (12) eine Bestimmung der Affinitäts- und/oder Assoziations- und/oder Dissoziationskonstante eines Zielmoleküls (12) mit dem mindestens einen Teilchen (11) oder mit einem zuvor an das mindestens eine Teilchen (11) angehefteten Molekül (13) umfasst, wobei die Affinitäts- und/oder Assoziations- und/oder Dissoziationskonstante auf der Grundlage der Änderung der optischen Eigenschaft im Laufe der Zeit für die Vielzahl von Proben bestimmt wird.

**11.** Vorrichtung (100) zur optischen Charakterisierung mindestens eines Teilchens (11), das in einer Probe (10) vorhanden ist, umfassend:

- eine Lichtquelle (110) zum Bilden eines Strahls zur Beleuchtung der Probe (10);
- ein optisches System (120), wobei die Probe (10), während des Vorgangs, in dem Objektraum des optischen Systems (120) positioniert ist;
- eine Erfassungseinheit (130, 140) zum Erfassen mindestens eines Phasenbilds und mindestens eines Intensitätsbilds des mindestens einen von dem Lichtstrahl beleuchteten Teilchens (11), wobei das Erfassen in einer Analyseebene erfolgt, die in dem Bildraum des optischen Systems (120) angeordnet ist; und
- eine Verarbeitungseinheit (150), die ausgestaltet ist zum:

  - Berechnen, ausgehend von dem mindestens einen Phasenbild und von dem mindestens einen Intensitätsbild, eines kombinierten Bilds, wobei das kombinierte Bild ausgehend von der normalisierten komplexen Transmission des Realteils der normalisierten komplexen Transmission oder des Imaginärteils der normalisierten komplexen Transmission erhalten wird; **dadurch gekennzeichnet, dass** die Recheneinheit (150) ferner ausgestaltet ist zum:

    - Summieren von Punkten des kombinierten Bilds auf einem gegebenen Bereich des kombinierten Bilds, das ein Bild des mindestens einen Teilchens umfasst;
    - Bestimmen mindestens einer optischen Eigenschaft des mindestens einen Teilchens (11) ausgehend von der Summe, wobei die mindestens eine optische Eigenschaft mindestens eine(n) unter der komplexen Dipol-Polarisierbarkeit, dem Absorptionsquerschnitt, dem Streuquerschnitt, dem Extinktionsquerschnitt umfasst.

**12.** Vorrichtung nach Anspruch 11, wobei die Erfassungseinheit (130, 140) ein Lateral-Shearing-Interferometer (140) umfasst.

**13.** Vorrichtung nach einem der Ansprüche 11 oder 12, wobei das optische System (120) ein Mikroskop-Objektiv umfasst.

**14.** Vorrichtung nach einem der Ansprüche 11 bis 13, wobei das optische System (120) eine variable numerische Apertur umfasst und die Recheneinheit (150) zur Bestimmung der mindestens einen optischen Eigenschaft ausgehend von einer Vielzahl von Phasenbildern und Intensitätsbildern, die für eine Vielzahl von numerischen Aperturen erfasst werden, ausgestaltet ist.

**15.** Vorrichtung nach einem der Ansprüche 11 bis 14, wobei die Recheneinheit (150) zur Bestimmung der mindestens einen optischen Eigenschaft ausgehend von einer Vielzahl von Phasenbildern und Intensitätsbildern, die für eine Vielzahl von Abständen zwischen der Probe und dem optischen System erfasst werden, ausgestaltet ist.

**16.** Vorrichtung zur Charakterisierung der Wechselwirkung mindestens eines Zielmoleküls (12) mit mindestens einem Teilchen (11), das in einer Probe (10) vorhanden ist, umfassend:

- eine Vorrichtung (100) zur optischen Charakterisierung des mindestens einen Teilchens (11) nach einem der Ansprüche 11 bis 15, die dazu ausgestaltet ist, im Laufe der Zeit mindestens eine optische Eigenschaft des mindestens einen Teilchens zu bestimmen; und wobei:

  - die Recheneinheit (150) ferner zur Charakterisierung der Wechselwirkung mit dem mindestens einen Zielmolekül (12) auf der Grundlage einer Messung der Änderung der mindestens einen optischen Eigenschaft im Laufe der Zeit ausgestaltet ist.

**17.** Vorrichtung (100) nach Anspruch 16, wobei die mindestens eine optische Eigenschaft mindestens eine(n) unter dem Realteil, dem Argument, der Norm oder dem Imaginärteil der komplexen Polarisierbarkeit des mindestens einen Teilchens (11) umfasst.

**18.** Vorrichtung (100) nach einem der Ansprüche 16 oder 17, umfassend ferner einen mikrofluidischen Kreis (15), um das mindestens eine Zielmolekül (12) in die Probe (10) zu bringen.

## Claims

**1.** A method for the optical characterization of at least one particle (11) present in a sample (10), comprising:

- the illumination of said sample (10) using a light beam, the sample (10) being positioned in the object space of an optical system (120);
- the acquisition of at least one phase image and at least one intensity image of said at least one particle (11) illuminated by the light beam, the acquisition being carried out in an analysis plane arranged in the image space of the optical system (120);
- the calculation of a combined image from said at least one phase image and said at least one intensity image, said combined image being obtained from the normalized complex transmission, the real part of the normalized complex transmission or the imaginary part of the normalized complex transmission; wherein the method is **characterized in that** it further comprises:

  - the summation of points of said combined image over a given field of the combined image comprising an image of said at least one particle;
  - the determination of at least one optical property of said at least one particle (11) from said sum, said at least one optical property comprising at least one of the complex dipolar polarizability, the effective absorption cross section, the effective scattering cross section, the effective extinction cross section.

**2.** The method as claimed in claim 1, wherein the at least one intensity image and the at least one phase image are acquired simultaneously.

**3.** The method as claimed in either of the preceding claims, further comprising:

- the variation of the numerical aperture of the optical system, making it possible to generate a plurality of numerical apertures; and
- the acquisition of a plurality of intensity images and phase images at said numerical apertures.

**4.** The method as claimed in any one of the preceding claims, further comprising:

- the variation of the distance between the sample and the optical system, making it possible to generate a plurality of distances; and
- the acquisition of a plurality of intensity images and phase images for said plurality of distances.

**5.** A method for characterization of the interaction of at least one target molecule (12) with said at least one particle (11), comprising:

- an optical characterization of said at least one particle (11) as claimed in any one of the preceding claims in order

to determine at least one of said optical properties over time;
- the characterization of the interaction with said at least one target molecule (12) on the basis of a measurement of the variation of said at least one optical property over time.

6. The method as claimed in claim 5, wherein said at least one optical property comprises at least one of the real part, the argument, the norm, or the imaginary part of the complex polarizability of the at least one particle (11).

7. The method as claimed in either of claims 5 and 6, wherein said at least one particle (11) is a metal particle and the illumination of the sample (10) comprises illumination in a wavelength range comprising the plasmon resonance wavelength of the at least one particle (11).

8. The method as claimed in any one of claims 5 to 7, wherein the illumination of the sample (10) comprises illumination in a wavelength range comprising the Mie resonance wavelength of the at least one particle (11).

9. The method as claimed in any one of claims 5 to 8, further comprising a prior step of calibration of said optical property as a function of the concentration of the at least one target molecule (12), wherein the calibration is carried out by measuring the optical property at a predetermined time for a series of samples with known concentrations of the target molecule (12), and
wherein the characterization of the interaction with said at least one target molecule (12) comprises a determination of the concentration of said target molecule (12) in the sample (10), on the basis of said calibration.

10. The method as claimed in any one of claims 5 to 9, further comprising:

- the formation of a plurality of samples comprising said at least one particle and said at least one target molecule, at a plurality of known concentrations;
- the optical characterization of said at least one particle for each sample of said plurality of samples; and wherein:

    - the characterization of the interaction with said at least one target molecule (12) comprises a determination of the affinity and/or association and/or disassociation constant of a target molecule (12) with the at least one particle (11) or with a molecule (13) attached beforehand to the at least one particle (11),

wherein said affinity and/or association and/or disassociation constant is determined on the basis of the variation of said optical property over time for said plurality of samples.

11. A device (100) for the optical characterization of at least one particle (11) present in a sample (10), comprising:

- a light source (110) for the formation of a beam for illumination of said sample (10);
- an optical system (120), the sample (10) being positioned during operation in the object space of said optical system (120);
- a unit (130, 140) for acquisition of at least one phase image and at least one intensity image of said at least one particle (11) illuminated by the light beam, the acquisition being carried out in an analysis plane arranged in the image space of said optical system (120); and
- a calculation unit (150) configured for:

    - the calculation of a combined image from said at least one phase image and said at least one intensity image, said combined image being obtained from the normalized complex transmission, the real part of the normalized complex transmission or the imaginary part of the normalized complex transmission; **characterized in that** the calculation unit (150) is further configured for:

        - the summation of points of said combined image over a given field of the combined image comprising an image of said at least one particle
        - the determination of at least one optical property of said at least one particle (11) from said sum, said at least one optical property comprising at least one of the complex dipolar polarizability, the effective absorption cross section, the effective scattering cross section, the effective extinction cross section.

12. The device as claimed in claim 11, wherein the acquisition unit (130, 140) comprises a multiwave lateral shearing interferometer (140).

**13.** The device as claimed in either of claims 11 and 12, wherein the optical system (120) comprises a microscope objective.

**14.** The device as claimed in any one of claims 11 to 13, wherein the optical system (120) comprises a variable numerical aperture and said calculation unit (150) is configured for determination of said at least one optical property from a plurality of phase images and intensity images which are acquired for a plurality of numerical apertures.

**15.** The device as claimed in any one of claims 11 to 14, wherein said calculation unit (150) is configured for determination of said at least one optical property from a plurality of phase images and intensity images which are acquired for a plurality of distances between the sample and the optical system.

**16.** A device for the characterization of the interaction of at least one target molecule (12) with at least one particle (11) present in a sample (10), comprising:

- a device (100) for the optical characterization of said at least one particle (11) as claimed in any one of claims 11 to 15, which is configured to determine at least one optical property of said at least one particle over time; and wherein:

  - said calculation unit (150) is further configured for the characterization of the interaction with said at least one target molecule (12) on the basis of a measurement of the variation of said at least one optical property over time.

**17.** The device (100) as claimed in claim 16, wherein said at least one optical property comprises at least one of the real part, the argument, the norm, or the imaginary part of the complex polarizability of the at least one particle (11).

**18.** The device (100) as claimed in either of claims 16 and 17, further comprising a microfluidic circuit (15) for adding the at least one target molecule (12) into the sample (10).

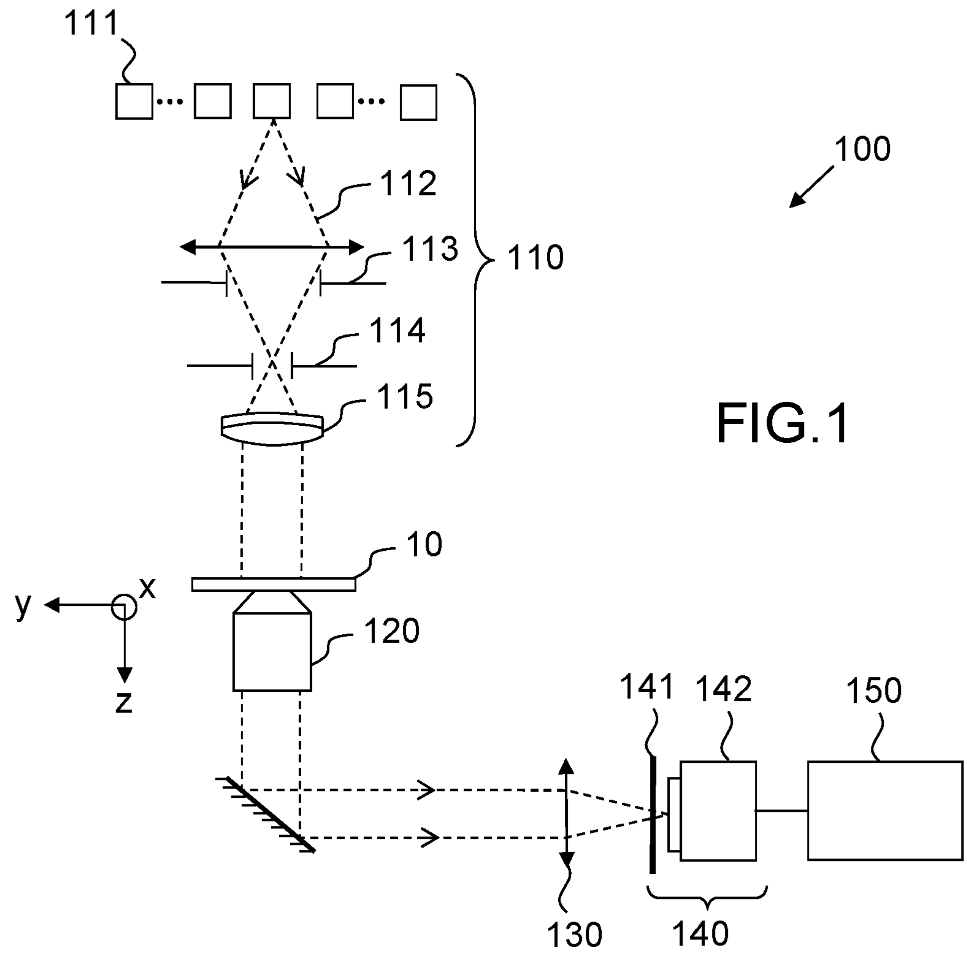
111
112
113
114
115
110
100
10
120
y
x
z
141
142
150
130
140

FIG.1

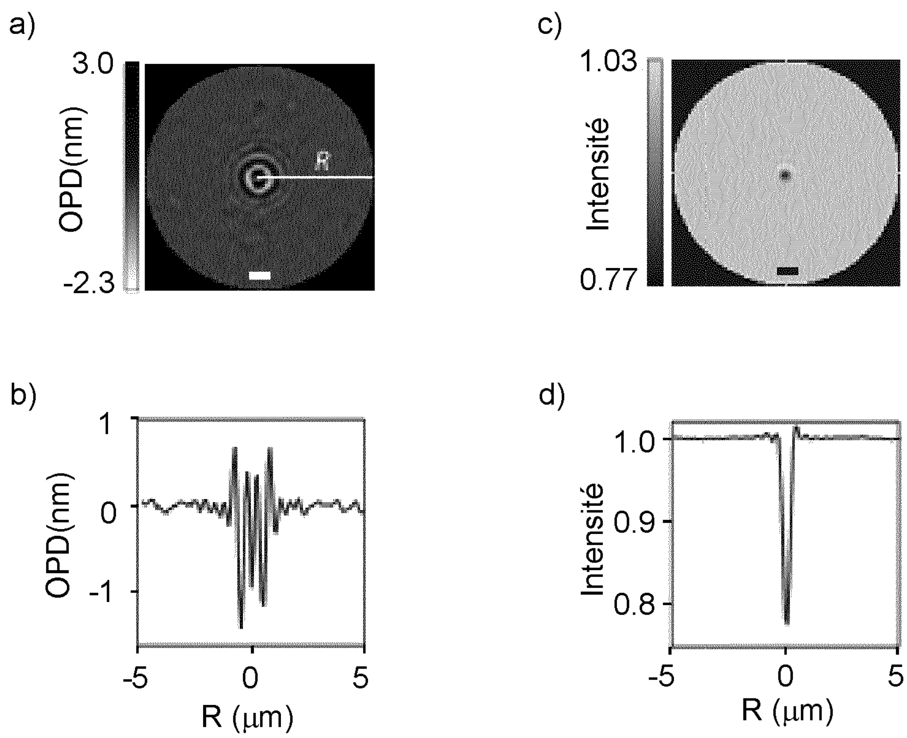
a)
3.0
OPD(nm)
-2.3
R
c)
1.03
Intensité
0.77
b)
1
0
-1
OPD(nm)
-5
0
5
R (µm)
d)
1.0
0.9
0.8
Intensité
-5
0
5
R (µm)

FIG.2

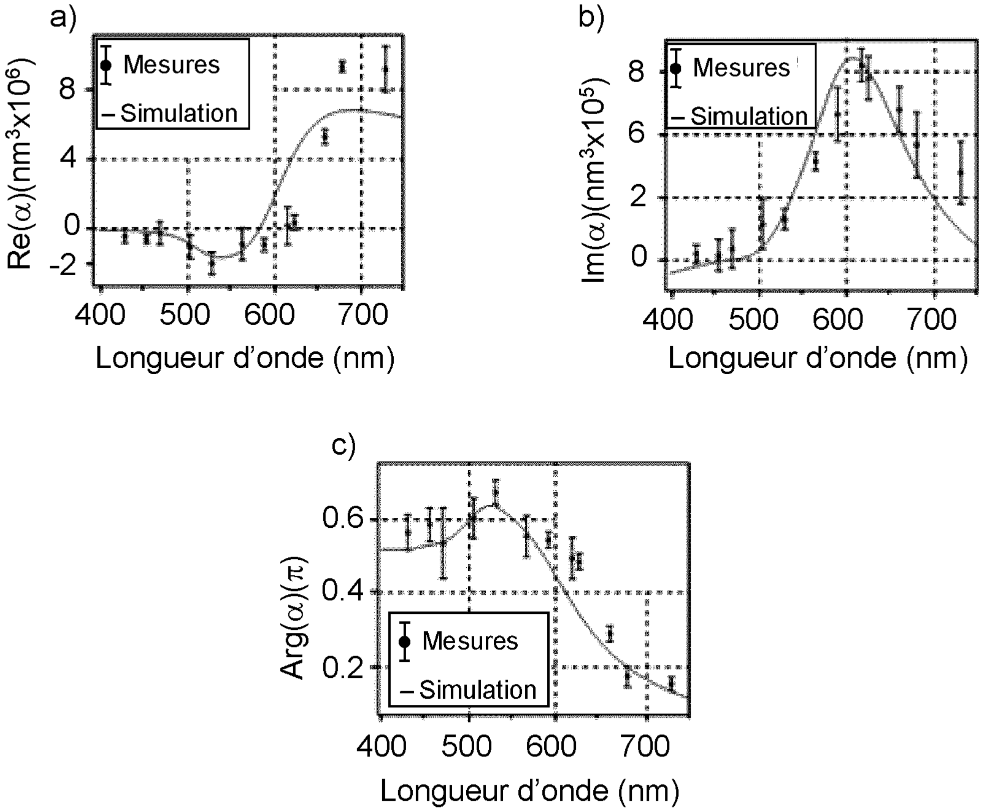
a)
Mesures
Simulation
Re(α)(nm³x10⁶)
8
4
0
-2
400 500 600 700
Longueur d'onde (nm)
b)
Mesures
Simulation
Im(α)(nm³x10⁵)
8
6
2
0
400 500 600 700
Longueur d'onde (nm)
c)
Mesures
Simulation
Arg(α)(π)
0.6
0.4
0.2
400 500 600 700
Longueur d'onde (nm)

FIG.3

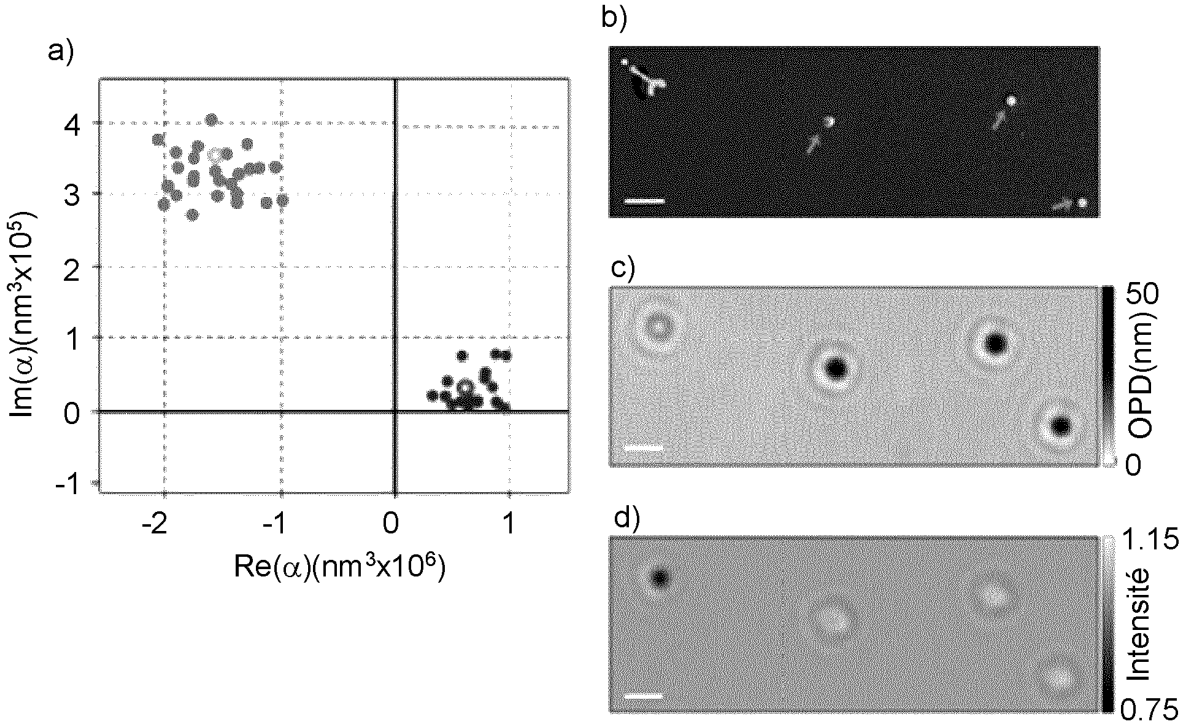
a)
Im(α)(nm³x10⁵)
4
3
2
1
0
-1
-2 -1 0 1
Re(α)(nm³x10⁶)
b)
c)
50
OPD(nm)
0
d)
1.15
Intensité
0.75

FIG.4

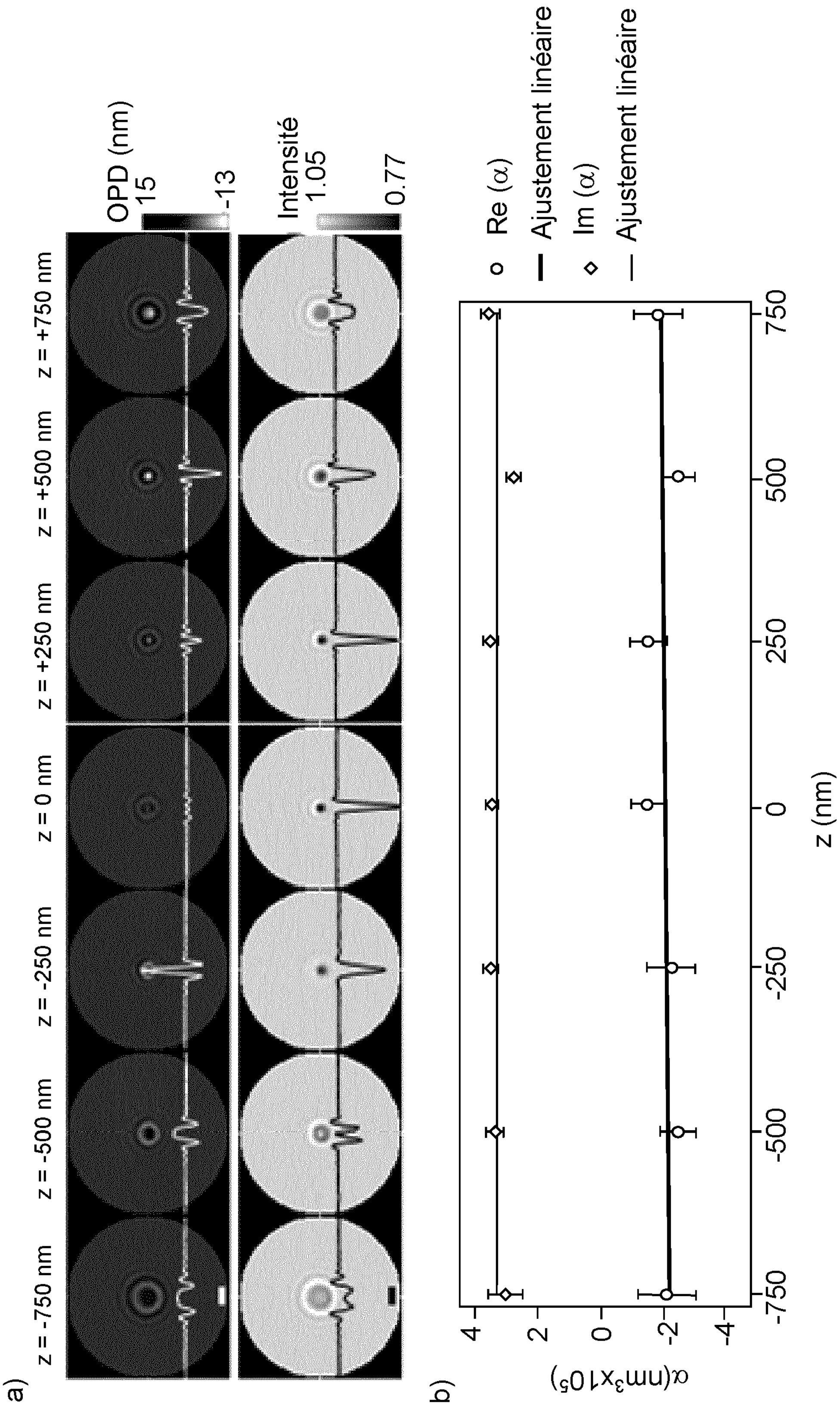
a)
z = -750 nm
z = -500 nm
z = -250 nm
z = 0 nm
z = +250 nm
z = +500 nm
z = +750 nm
OPD (nm)
15
-13
Intensité
1.05
0.77
b)
Re (α)
Ajustement linéaire
Im (α)
Ajustement linéaire
α(nm³x10⁵)
4
2
0
-2
-4
-750
-500
-250
0
250
500
750
z (nm)

FIG.5

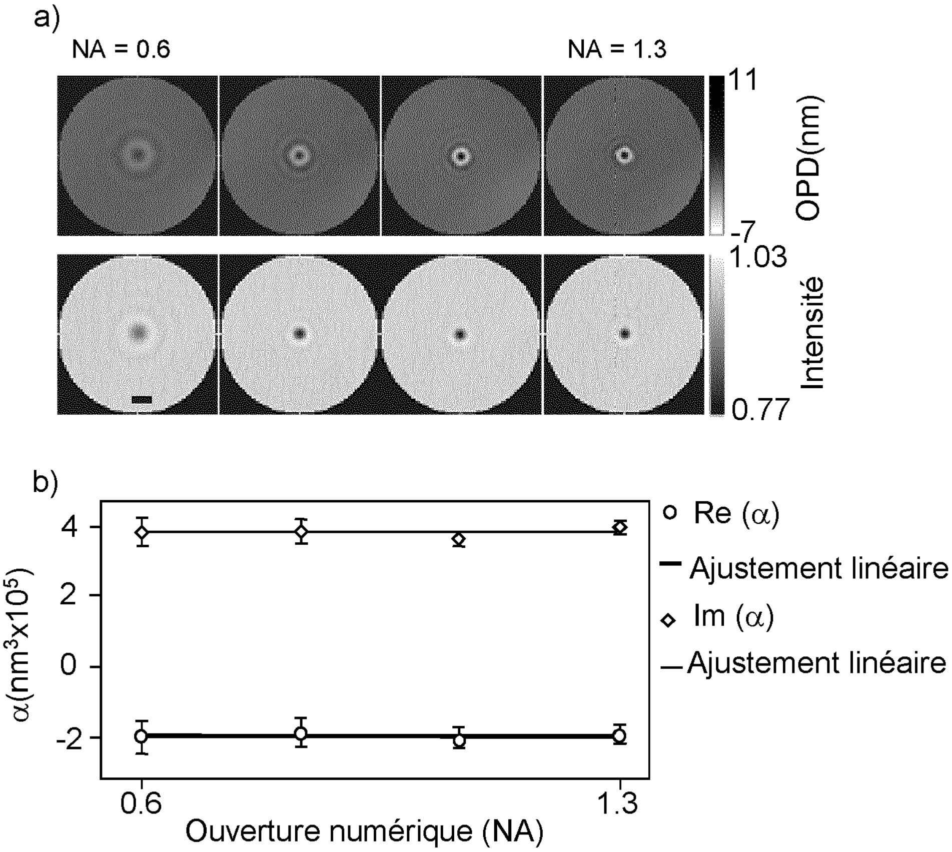
a)
NA = 0.6
NA = 1.3
11
-7
OPD(nm)
1.03
0.77
Intensité
b)
Re (α)
Ajustement linéaire
Im (α)
Ajustement linéaire
α(nm³x10⁵)
4
2
0
-2
0.6
1.3
Ouverture numérique (NA)

FIG.6

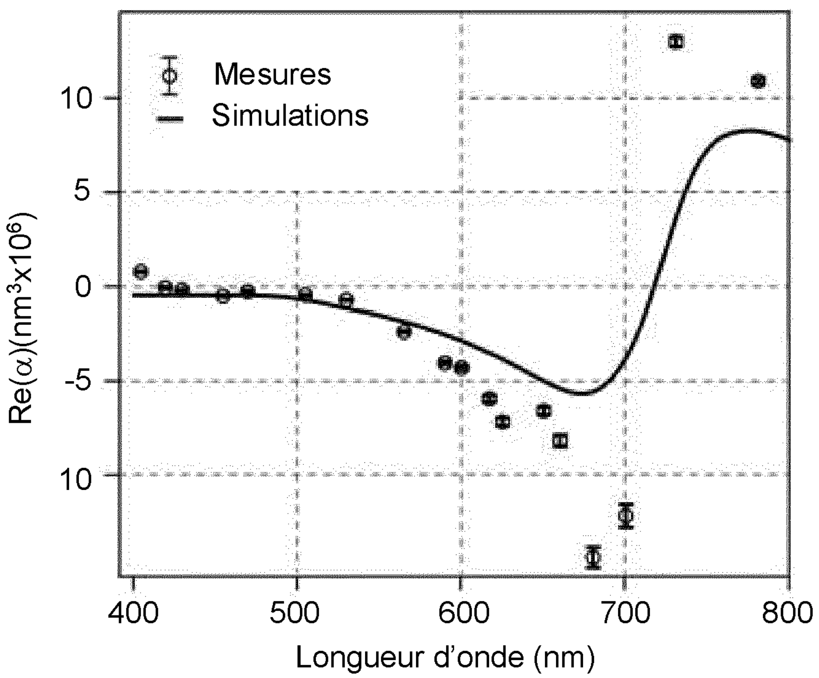
Mesures
Simulations
Re(α)(nm³x10⁶)
10
5
0
-5
10
400
500
600
700
800
Longueur d'onde (nm)

FIG.7

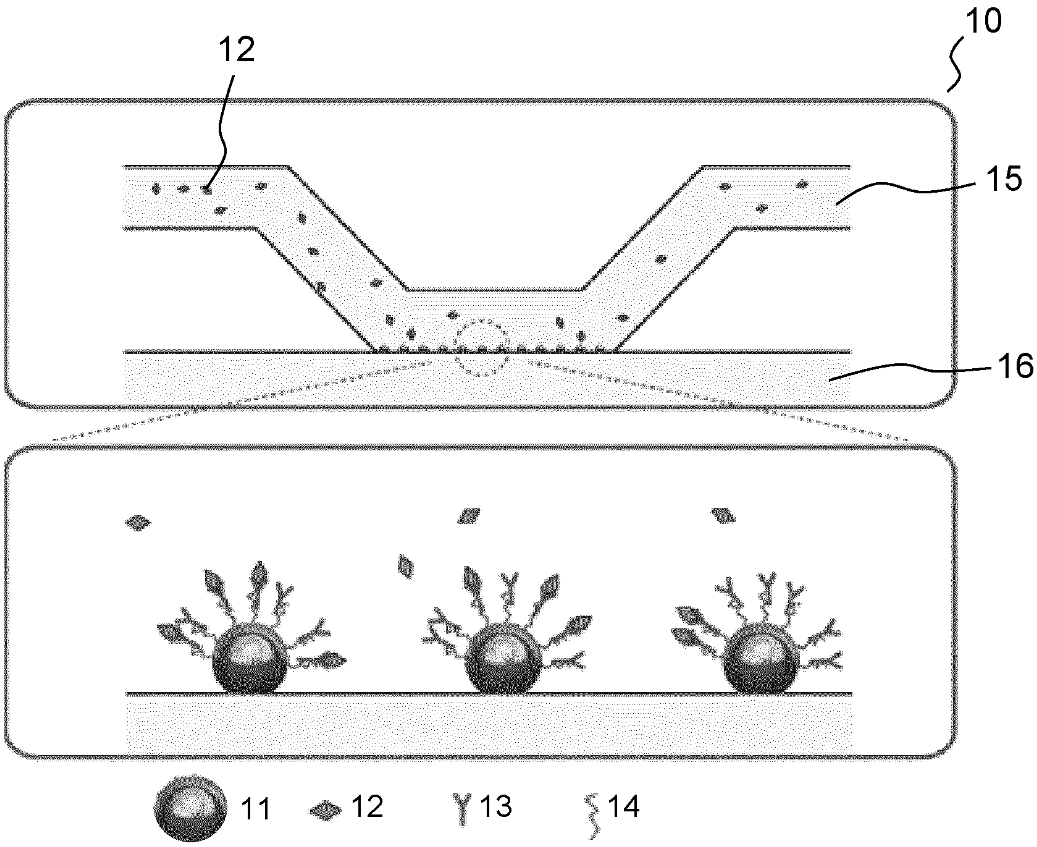
10
12
15
16
11
12
13
14

FIG.8

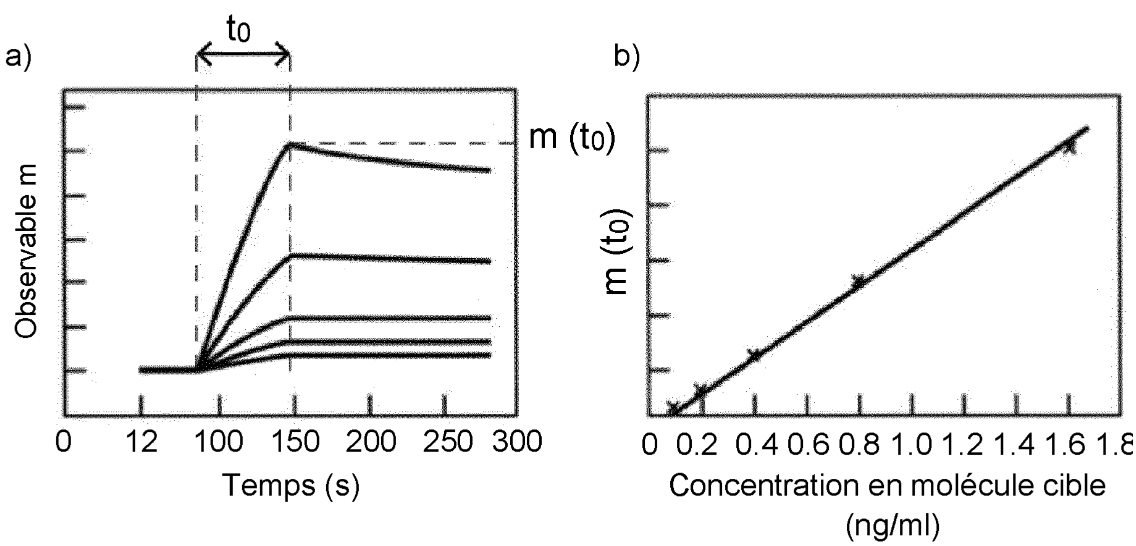
a)
t0
m (t0)
Observable m
0
12
100
150
200
250
300
Temps (s)
b)
m (t0)
0
0.2
0.4
0.6
0.8
1.0
1.2
1.4
1.6
Concentration en molécule cible
(ng/ml)

FIG.9

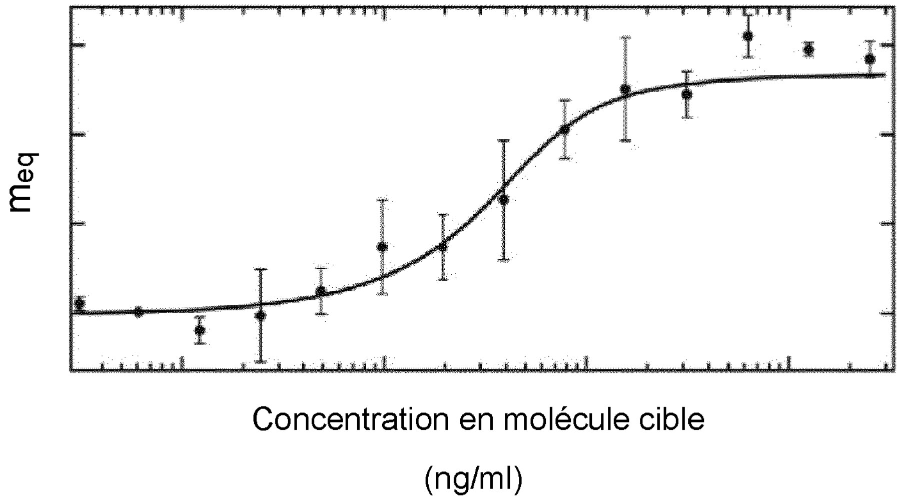

m_eq
Concentration en molécule cible
(ng/ml)


FIG.10

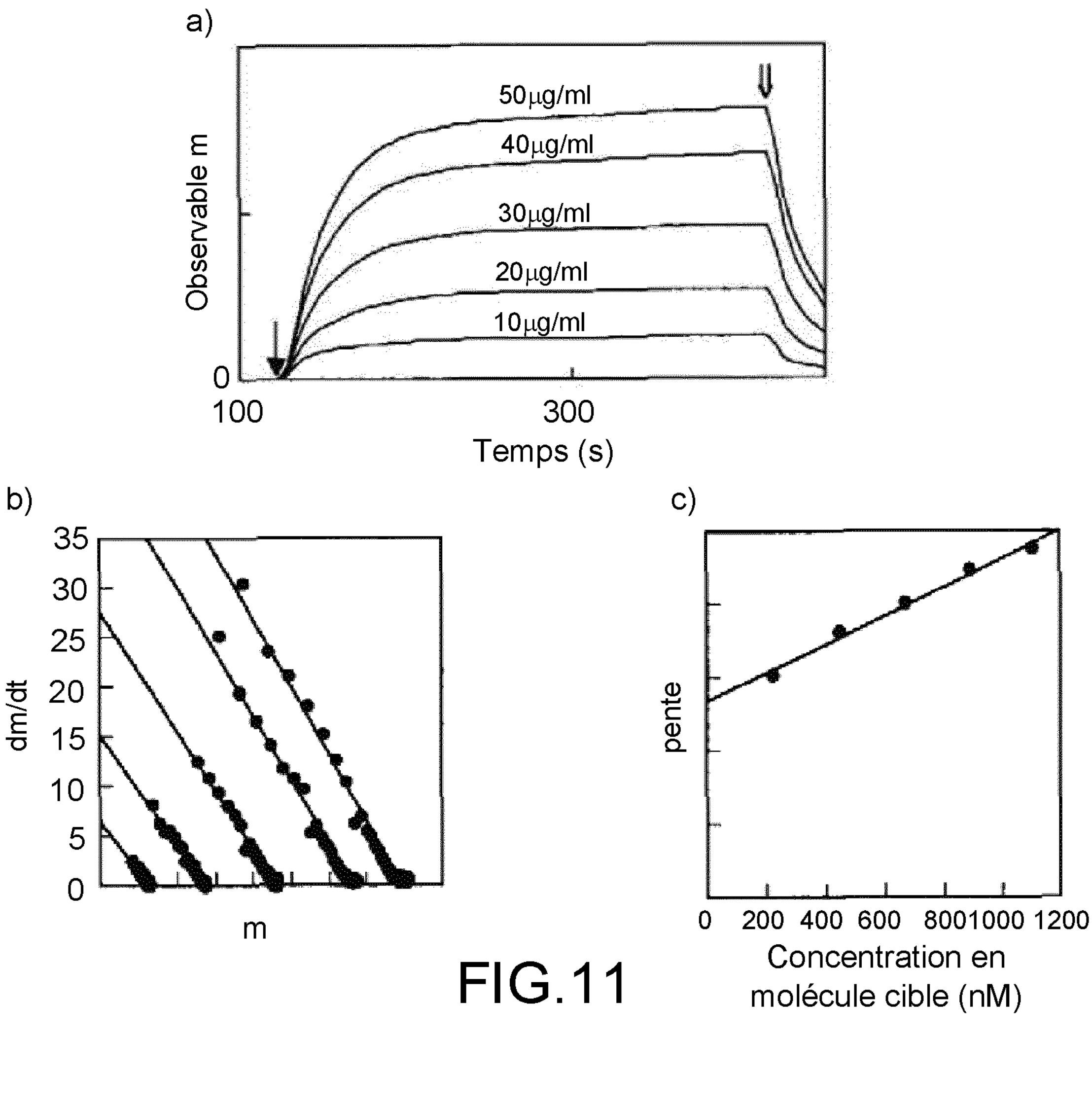

a)
Observable m
50µg/ml
40µg/ml
30µg/ml
20µg/ml
10µg/ml
0
100
300
Temps (s)
b)
dm/dt
35
30
25
20
15
10
5
0
m
c)
pente
0 200 400 600 8001000 1200
Concentration en
molécule cible (nM)


FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20030064386 A
- US 20090325199 A


### Littérature non-brevet citée dans la description


- **A. ARBOUET et al.** Direct Measurement of the Single-Metal-Cluster Optical Absorption. *Phys. Rev. Lett.*, 2004, vol. 93, 127401
- **B.J. DAVIS et al.** Robust determination of the anisotropic polarizability of nanoparticles using coherent confocal microscopy. *Journal of the Optical Society of America A*, 2008, vol. 25, 2102-2113
- **P. VAN DUYNE et al.** Single Silver Nanoparticles as Real-Time Optical Sensors with Zeptomole Sensitivity. *Nano Lett.*, 2003, vol. 3 (8), 1057-1062
- **J. PRIMOT et al.** Extended Hartmann Test Based on the Pseudoguiding Property of a Hartmann Mask Completed by a Phase Chessboard. *Applied Optics*, 2000, vol. 39, 5715
- **S. KHADIR et al.** Optical Imaging and Characterization of Graphene and Other 2D Materials Using Quantitative Phase Microscopy. *ACS Photonics*, 2017, vol. 4, 3130
- **S. KHADIR et al.** Quantitative model of the image of a radiating dipole through a microscope. *Journal of the Optical Society of America A*, 2019, vol. 36, 478-484
- **C.L. HOLLOWAY et al.** A discussion on the interpretation and characterization of metafilms/metasurfaces: The two-dimensional equivalent of metamaterials. *Metamaterials*, 2009, vol. 3, 100
- **A. MENDOZA-GALVÁN et al.** Optical response of supported gold nanodisks. *Optics Express*, 2011, vol. 19, 12093
- **R. OGIER et al.** Near-Complete Photo Spin Selectivity in a Metasurface of Anisotropic Plasmonic Antennas. *Physical Review X*, 2015, vol. 5 (5), 041019
- **G. LAVIGNE et al.** Susceptibility Derivation and Experimental Demonstration of Refracting Metasurfaces Without Spurious Diffraction. *IEEE Transactions on Antennas and Propagation*, 2018, vol. 66, 1321